Europäisches Patentamt

European Patent Office

Office européen des brevets

(11) Publication number: **0 474 246 A2**

# EUROPEAN PATENT APPLICATION

(21) Application number: **91115097.7**

(51) Int. Cl.⁵: **G06F 15/332**

(22) Date of filing: **06.09.91**

(30) Priority: **06.09.90 JP 238594/90**

(43) Date of publication of application:
**11.03.92 Bulletin 92/11**

(84) Designated Contracting States:
**DE FR**

(71) Applicant: **MATSUSHITA ELECTRIC
INDUSTRIAL CO., LTD.**
**1006, Oaza Kadoma**
**Kadoma-shi, Osaka-fu, 571(JP)**

(72) Inventor: **Fujiwara, Mikio**
**402, Highlark Nishikyogoku, 64,**
**Hamamoto-cho**
**Nishikyogoku, Ukyo-ku, Kyoto-shi, Kyoto(JP)**
Inventor: **Minemaru, Takayuki**
**Syonan-ryo, 1-23, Kikusui-dori**
**Moriguchi-shi, Osaka(JP)**

(74) Representative: **Eisenführ, Speiser & Strasse**
**Martinistrasse 24**
**W-2800 Bremen 1(DE)**

(54) **Image signal processor.**

(57) In the image signal processor of the present invention, a plurality of multiplier and accumulator units are built in a large-scale integrated circuit. The multiplier and accumulator unit is formed in such structure that a multiplier with a coefficient RAM to which a signal is able to written from outside and, an adder capable of selecting either cumulation of the multiplying result or addition of the multiplying result to an external input signal are connected to each other through a pipe line, thereby realizing high-speed processing of the image. Moreover, the same single image signal processor can meet two or more kinds of image processing.

Fig. 1

EP 0 474 246 A2

## BACKGROUND OF THE INVENTION

### 1. Field of the Invention

The present invention relates to an image signal processor for performing image signal processings particularly digital signal processings for the industrial use such as orthogonal transform on a block of 8 × 8 or 16 × 16, multi-stage digital filtering and the like.

### 2. Description of the Prior Art

It has been a recent trend to incorporate many functional blocks in one large-scale integrated circuit as a result of the advancement of the semiconductor technology. And, special large-scale integrated circuits have been utilized for the orthogonal transform or digital filtering, etc. in the technical progress of the digital image signal processing.

For an example of the large-scale integrated circuits of the type referred to above for image processing, it is proposed to perform DCT (discrete cosine transform) by the use of a ROM and without using multipliers (See, for instance, in IEEE Trans. Circuits Syst. vol. 36, pp. 610-617, Apr. 1989, "VLSI Implementation of a 16 × 16 Discrete Cosine Transform" by M.-T. Sun, T.-C. Chen and A. M. Gottlieb).

The above processor executes arithmetic operation on data of M-bit width necessary for DCT by calculating in unit of subset of i-th bit data (i = 1 to M) and making digit corrections of results obtained with use of a digit factor $2^{(i-1)}$.

DCT is performed, according to this procedure, as follows.

A one dimensional DCT for a data row u(n) of N integers representing a negative number with two's complement expression in the M bit width, i.e.,

$$u(n) = \sum_{i=0}^{M-1} a_i(n) \cdot 2^i, \, a_{M-1}(n) \in [0,-1], \, a_i(n) \in [0,1], \, 0 \le i \le M-2, \, 0 \le n \le N-1$$

is expressed by the following formulae (1)......(3);

$$v(k) = \alpha(k) \sum_{n=1}^{N-1} u(n) \cos\left[\pi(2n+1)\frac{k}{2N}\right], \qquad (1)$$

$$0 \le k \le N-1$$

$$\alpha(0) = \left(\frac{1}{N}\right)^{1/2} \qquad (2)$$

$$\alpha(k) = \left(\frac{2}{N}\right)^{1/2}, \, 0 \le k \le N-1 \qquad (3)$$

The formula (1) is turned to be a formula (4) when substituted by the above index expression of u(n).

$$v(k) = \alpha(k) \sum_{n=0}^{N-1} \sum_{i=0}^{M-1} a_i(n) \cdot 2^i \cdot \cos[\pi(2n+1)\frac{k}{2N}],$$

$$0 \leq k \leq N-1 \qquad (4)$$

The formula (4) will be settled in a form of summation with respect to i as follows;

$$v(k) = \sum_{i=0}^{M-1} 2^i \{\sum_{n=0}^{N-1} a_i(n) \cdot \alpha(k) \cdot \cos[\frac{\pi(2n+1)K}{2N}]\},$$

$$0 \leq k \leq N-1 \qquad (5)$$

In the formula (5), $a_i(n)$ enclosed in { } is one bit width data of 0 or 1 or, 0 or -1 and,

$$D(k) = \alpha(k) \cdot \cos[\pi(2n+1)\frac{k}{2N}]$$

is not dependent on the value of the data u(n), and therefore it is possible to prepare D(k) beforehand with processing if the value of N is determined.

Furthermore, by making use of the fact that the core, that is,

$$\cos[\pi(2n+1)\frac{k}{2N}]$$

is symmetric to n with a cycle ($\pi$), the formula (5) will be changed to as below since N = 2N' when N is an even number;

$$v(k) = \sum_{i=0}^{M-1} 2^i \cdot \{\sum_{n=0}^{N-1} a_i(n) \cdot \alpha(k) \cdot \cos[\frac{\pi(2n+1)k}{4N'}]$$

$$+ \sum_{n=0}^{N-1} a_i(2N'-1-n) \cdot \alpha(k)$$

$$\cdot \cos[\frac{\pi(2(2N'-1-n)+1)k}{4N'}]\},$$

$$0 \leq k \leq 2N'-1 \qquad (6)$$

Cos(function) in the second item of the formula (6) is changed to;

$$\cos\left[\frac{\pi\left(2\left(2N'-1-n\right)+1\right)k}{4N'}\right]$$

$$=\cos\left(\pi k\right).\cos\left[\frac{-\left(2n+1\right)\pi k}{4N'}\right]$$

$$=\cos\left(\pi k\right).\cos\left[\frac{\left(2n+1\right)\pi k}{4N'}\right] \tag{7}$$

When k = 2k', 0≤k'≤N'-1, the formula (7) will be;

$$\cos\left[\frac{\pi\left(2\left(2N'-1-n\right)+1\right)k}{4N'}\right]=\cos\left[\frac{\left(2n+1\right)\pi k}{4N'}\right] \tag{8}$$

Likewise, when k = 2k' + 1, 0≤k'≤N'-1, the formula (7) will be;

$$\cos\left[\frac{\pi\left(2\left(2N'-1-n\right)+1\right)k}{4N'}\right]=-\cos\left[\frac{\left(2n+1\right)\pi k}{4N'}\right] \tag{9}$$

The formula (6) is expressed with respect to even u2K and odd k as follows, with using formulae (8) and (9);

When k = 2k', 0≤k'≤N'-1,

$$v\left(2k'\right)=\sum_{i=0}^{M-1}2^{i}.\left\{\sum_{n=0}^{N-1}\left(a_{i}\left(n\right)+a_{i}\left(2N'-1-n\right)\right).\alpha\left(2k'\right).\cos\left[2\pi\left(2n+1\right)\frac{k'}{4N'}\right]\right\}$$

$$0\leq k'\leq N'-1 \tag{10}$$

When k = 2k' + 1, 0≤k'≤N'-1,

$$v\left(2k'+1\right)=\sum_{i=0}^{M-1}2^{i}.\left\{\sum_{n=0}^{N-1}\left(a_{i}\left(n\right)-a_{i}\left(2N'-1-n\right)\right)\right.$$

$$\left.\cdot\alpha\left(2k'+1\right).\cos\left[\frac{\pi\left(2n+1\right)\left(2k'+1\right)}{4N'}\right]\right\},$$

$$0\leq k'\leq N'-1 \tag{11}$$

In the manner as above, the arithmetic operation

$$\alpha\left(k\right).\cos\left[\frac{\pi\left(2n+1\right)k}{2N}\right]$$

within { } can be achieved only through addition or subtraction without using multiplication if the values of the core of DCT, is started in an ROM beforehand.

Meanwhile, a method for forming a digital filter only through addition by using an ROM is proposed in IEEE Trans. Acoust., Speech, Signal Processing, vol. ASSP-22, pp. 456-462, Dec. 1974 "A New Hardware Realization of Digital Filters" by A. Peled and B. Liu.

According to this method, arithmetic operation regarding data of a certain bit width is also made by calculating each sub-set of i-th bit and making a digit correction with $2^{(i-1)}$ to each result of the calculation and, accordingly, a final result is obtained only through an addition operation.

This method is applied to an FIR filter of N dimension as follows.

Supposed that time series input and output image signals each composed of the M bit width data are expressed by X(n) and Y(n), respectively, the latter Y(n) of the image signal is generally expressed as follows, with the use of the values of the input signals up to N times before;

$$Y(n) = a_0 X(n) + a_1 X(n-1) + a_2 X(n-2) + \ldots + a_{N-1} X(n-N) \qquad (12)$$

wherein $a_i (0 \leq i \leq N-1)$ is a constant coefficient of the filter independent of the values of the signals. Since the input signal X(n-j) is expressed with using twos complement expression as follows;

$$X(n-j) = -X_{M-1}(n-j) 2^{M-1} + \sum_{k=0}^{M-2} X_k(n-j) 2^k,$$
$$(0 \leq j \leq N-1, X_k(n-j) = [0 \vee 1])$$

the formula (12) is expressed as follows;

$$Y(n) = a_0 (-X_{M-1}(n) 2^{M-1} + \sum_{k=0}^{M-2} X_k(n) 2^k)$$
$$+ a_1 (-X_{M-1}(n-1) 2^{M-1} + \sum_{k=0}^{M-2} X_k(n-1) 2^k)$$
$$+ a_2 (-X_{M-1}(n-2) 2^{M-1} + \sum_{k=0}^{M-2} X_k(n-2) 2^k)$$
$$+ \ldots + a_N (-X_{M-1}(n-N) 2^{M-1} + \sum_{k=0}^{M-2} X_k(n-N) 2^k)$$

$$(13)$$

When the following equation is assumed;

$$\phi\{X_k(n), X_k(n-1), X_k(n-2), \ldots, X_k(n-N)\} = a_0 X_k(n) + a_1 X_k(n-1) + a_2 X_k(n-2) + \ldots + a_N X_k(n-N) \qquad (14)$$

$$Y(n) = \sum_{k=0}^{M-2} \varphi\{X_k(n), X_k(n-1), X_k(n-2), \ldots, X_k(n-N)\} 2^k$$
$$- \varphi\{X_{M-1}(n), X_{M-1}(n-1), X_{M-1}(n-2), \ldots, X_{M-1}(n-N)\} 2^{M-1}$$

$$(15)$$

By providing an ROM or the like so that each value of $\phi\{X_k(n), X_k(n-1), X_k(n-2), \ldots, X_k(n-N)\}$ can be selected by an N bit width signal, the digital filter can be constituted only through addition or subtraction.

These processors mentioned above have an advantage in that the chip size of the integration circuit therefor can be reduced as compared with the care where a parallel multiplier is used.

However, in the circuit arrangement using ROM and without a multiplier, it is impossible to change the transformation coefficients or transmission coefficients for the orthogonal transform or filtering processing. Moreover, the circuit arrangement is not applicable to two or more different kinds of processing each expressed by a combination of the same fundamental functions without increasing the number of parts belonging to the same integrated circuit so much, for example, the above-described DCT processor cannot be used for the digital filtering. In other words, the above circuit arrangement lacks flexibility.

Moreover, although real time processing is possible for DCT processing even without using a multiplier since DCT processing can afford a sufficient time for processing, the multiplier is indispensable for the affine transform, etc. so as to avoid the processing delay.

Since ROM is used for serial operation in bit unit in place of the parallel multiplier in the above-described circuit arrangement, it is necessary to sequentially repeat operations for every bit, thus eventually elongating the processing time. Further, a flexible combination of the fundamental elements is hard to be achieved although each element is commonly usable for realizing an individual function.

Further, in a conventional image signal processor having a fixed decimal point, are arithmetric operation is performed after setting a decimal point at a predetermined digit place and the result thereof is outputted after rounding N bits of M bits before the decimal point at the first decimal place and performing a clipping processing. However, since almost of the results overflow the range for clipping processing depending on values of coefficients used therefor, it becomes necessary to normalization of coefficients, thereafter, an arithmatic operation such as a multi-plication operation to the results obtained thereby in order to maintain the precision in the operation without changing the bit width.

## SUMMARY OF THE INVENTION

An essential object of the present invention is to provide an image signal processor with high flexibility usable for different image processings of at least two kinds by enabling to change transformation coefficients and/or transmission coefficients, using parallel multipliers for multiplying each image signal with a corresponding coefficient signal and constituting a combination of devices each having a single function such as a parallel multiplier or the like as a firm ware.

A further object of the present invention is to provide an image signal processor capable of performing necessary image processings maintaining the precision in the operation without need of normalization of coefficients even if their values are quite different from each other processings but the same output bit width is required.

In accomplishing the above-described object, according to the present invention, an image signal processor has a plurality of multiplier and accumulator units built in a large-scale integrated circuit, each multiplier and accumulator unit constituted by a multiplier provided with a coefficient RAM capable of optionally changing the content thereof through writing from outside and for multiplying a coefficient signal output from the coefficient RAM with an image signal, and an adder capable of switching to either cumulate the result of the multiplication or add the result of the multiplication to an external input signal by a control signal, so that the combination of multiplications and accumulations in the multiplier and accumulator units and the exchange of data between the multiplier and accumulator units are arranged in the form of a firm ware, making it possible to execute operations corresponding to the kind of the image processing in accordance with a signal selecting the kind of the image signal input from outside.

## BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1 is a diagram showing the structure of a multiplier and accumulator unit in one preferred embodiment of the present invention;

Fig. 2 is a diagram showing the structure of a group of multiplier and accumulator units constituted by eight multiplier and accumulator units of Fig. 1;

Fig. 3 is a diagram showing the structure of an image signal processor including two groups of multiplier and accumulator units of Fig. 2 according to one preferred embodiment of the present invention;

Fig. 4 is a block diagram showing a composition of the central control circuit according to the present invention;

Fig. 5 is a block diagram showing a composition of the timing signal generating unit according to the present invention;

Fig. 6 is a block diagram showing a composition of the clipping rounding and adder unit according to the present invention;

Fig. 7 is a block diagram showing a composition of the shift and clip unit according to the present invention;

Fig. 8 is a table explanatory of the operation of the shift and clip unit when a rounding position indicating signal is given;

Fig. 9 is a diagram explanatory of the operation of the clip unit for detecting overflow and/or underflow;

Fig. 10 is an operational circuit for DCT treatment;

Fig. 11 is a chart in time sequence of the operation of the circuit of Fig. 10;

Fig. 12 is a diagram explanatory of the multiplication of a line of image signals with a DCT transform line;

Fig. 13 is a diagram explanatory of the multiplication of a transposed line of the DCT transform line with the line resulting from the multiplication of Fig. 12;

Fig. 14 is a diagram explanatory of the order in write and read to a memory device;

Fig. 15 is a diagram showing the structure of an image signal processor according to the present invention when 8x8 DCT treatment is performed;

Fig. 16 is a timing chart of respective timing control signals used for $8 \times 8$ DCT processing;

Fig. 17 is a diagram showing the structure of the processor when $16 \times 16$ DCT processing is performed;

Fig. 18 is a diagram showing the structure of an image signal processor according to the present invention when 16x16 DCT treatment is performed;

Fig. 19 is a structural diagram of an operation in FIR digital filtering processing;

Fig. 20 is a diagram explanatory of the operation when FIR digital filtering treatment is constituted by use of a pipe line;

Fig. 21 is a diagram when FIR digital filtering processing is constituted by use of a pipe line;

Fig. 22 is a diagram showing the structure of an image signal processor according to the present invention when the FIR digital filtering processing up to 15 degrees is performed;

Fig. 23 is a structural diagram of an FIR digital filter of 63 degrees constituted by four image signal processors of the present invention;

Fig. 24 is a block diagram showing the variable length delay circuit according to the present invention;

Fig. 25 is a diagram showing the structure of an image signal processor of the present invention for constituting a multi-stage FIR digital filter;

Fig. 26 is a structural diagram of an operation for calculating x' through affine transformation processing;

Fig. 27 is a diagram when the operation of Fig. 18 is processed through a pipe line; and

Fig. 28 is a diagram showing the structure of an image signal processor according to the present invention when the affine transformation processing is performed.

## DETAILED DESCRIPTION OF THE PREFERRED EMBODIMENTS

An image signal processor according to the present invention will be depicted hereinbelow for each case of 8x8 DCT treatment, $8 \times 8$ IDCT processing, $16 \times 16$ DCT processing, $16 \times 16$ IDCT processing, FIR digital filtering processing, three dimensional affine transformation processing and hue transformation processing with reference to the accompanying drawings.

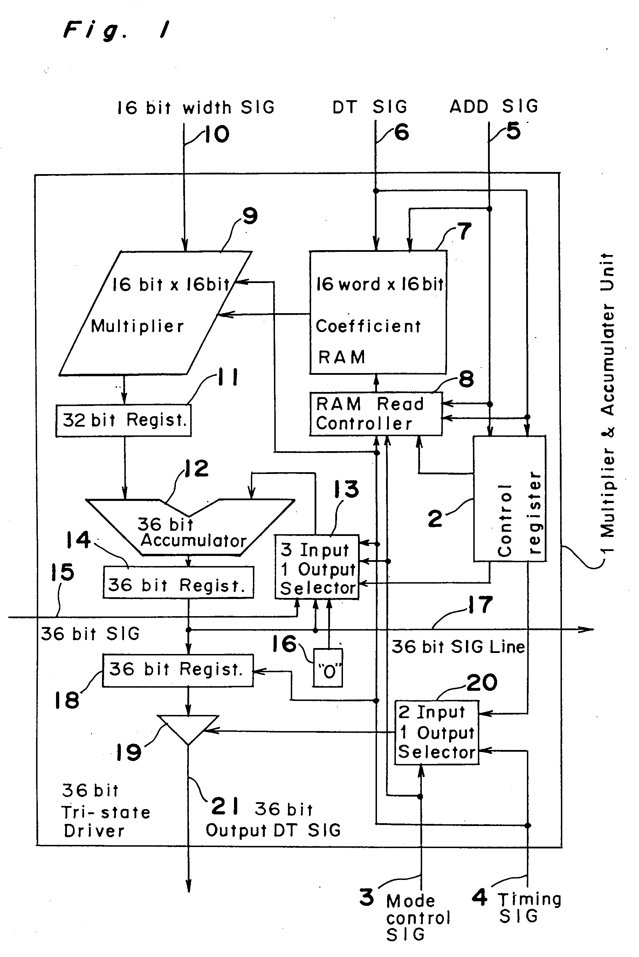

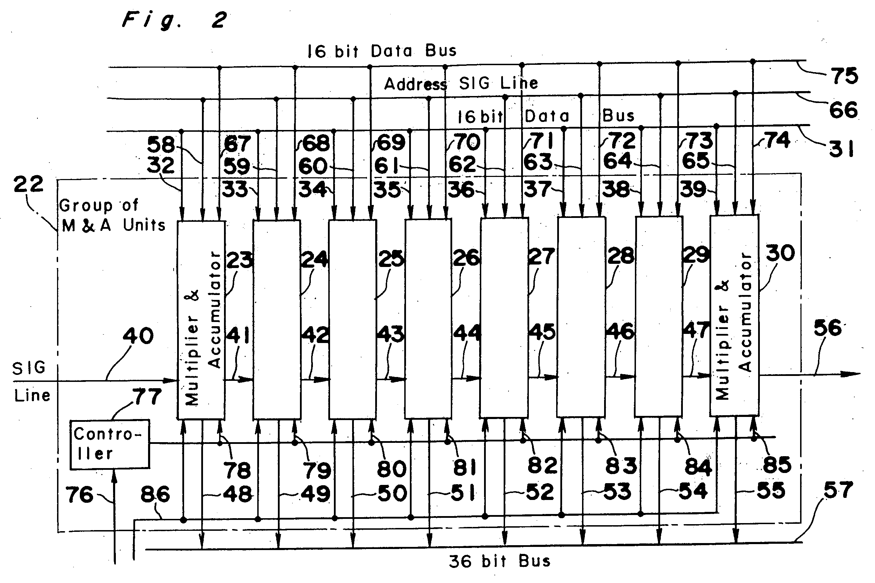

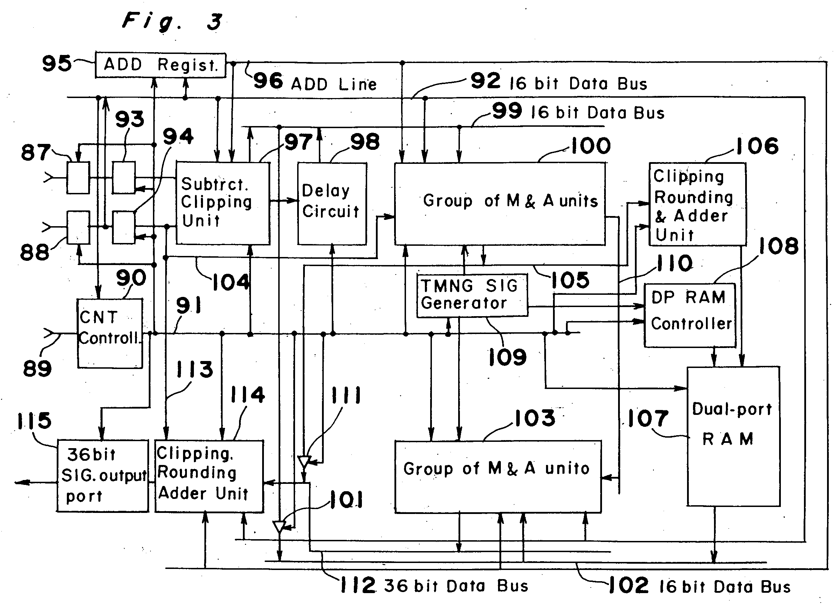

Fig. 1 shows an example of the structure of a multiplier and accumulator unit 1 constituting an image signal processor of the present invention. The multiplier and accumulator unit 1 is provided with a 16 bits × 16 bits multiplier and a 36 bit adder. The image signal processor described below is in such structure as shown in Fig. 3 that uses two multiplier and accumulator blocks 22, each block comprised of eight units in the same structure as the unit 1 of Fig. 2. Now, the structure of the image signal processor of the present invention will be described with reference to Figs. 1 through 3.

In Fig. 1, a control register 2 holds a signal for controlling the circuits within the multiplier and accumulator unit 1. A computing operation performed in the multiplier and accumulator unit 1 is controlled by a signal of the control register 2, a signal 3 input from outside the unit 1 for controlling the kind of the image processing, and a timing control signal 4. The content of the signal in the control register 2 is alterable by writing a data signal 6 into the control register 2 through a 16 bit data bus from outside, with an address signal 5 set as an address value of the control register 2. A coefficient RAM 7 having a capacity of 16 words × 16 bits stores coefficient signals for image processing. When the coefficient signal is written into the coefficient RAM 7 by use of the address signal 5 and data signal 6, image processing with optional coefficient signals becomes possible.

An RAM read control circuit 8 generates an address signal for controlling reading of the coefficient signal from the coefficient RAM 7. The address signal is generated at a timing corresponding to the kind of the image processing by the signal from the control register 2 and timing control signal 4. The coefficient signal read from the coefficient RAM 7 is input as a multiplier of the 16 bit x 16 bit parallel multiplier 9. The multiplier 9 multiplies the coefficient signal with a 16 bit width data signal 10 as a multiplicand and inputs the resultant 32 bit width signal to a 32 bit width register 11. When the 16 bit width data signal 10 is taken into the multiplier 9, it is controlled by the timing control signal 4. The signal taken into the 32 bit width register 11 is input to an accumulator 12 as a summand. In the accumulator 12, the 32 bit width signal as a summand is added to a 36 bit width output signal from a 3 inputs 1 output selector 13. The obtained 36 bit width signal is sent to a 36 bit width register 14. The selector 13 selects one signal among the 36 bit width signals 15 resulting from the multiplication and accumulation in a multiplier and accumulator unit adjacent to the unit 1, the result of addition taken into the 36 bit width register 14 from the accumulator 12, and a "0" signal 16 for initializing the accumulator 12 in accordance with the combination of the signal from the control register 2 and the signal 3 selecting the kind of the image processing, and timing control signal 4. In the case where the 36 bit width input data signal 15 is selected, the result of the multiplication and accumulation in the adjacent unit is added to the result of the multiplication and accumulation in the unit 1. Meanwhile, if the result of the addition taken into the 36 bit width register 14 from the accumulator 12 is selected, the accumulator 12 functions as a cumulator. When the "0" signal 16 is selected, the cumulation is initialized at the time of the cumulation. On the other hand, the result of the multiplication is outputted as it is when the cumulation is not performed. The signal taken into the 36 bit width register 14 is input to an adjacent multiplier and accumulator unit through a 36 bit width output data signal 17. A 36 bit width register 18 takes in the signal of the 36 bit width register 14 at a timing indicated by the timing control signal 4 and outputs the same to a 36 bit width tri-state driver 19. The 36 bit width tri-state driver 19 outputs, upon receipt of a signal from a 2 inputs 1 output selector 20, a signal of the 36 bit width register 18 which is the result of the multiplication and accumulation in the unit 1 as an output data signal 21. The 2 inputs 1 output selector 20 selects one of the timing control signal 4 and signal from the control register 2 in accordance with the signal 3 controlling the kind of the image processing. If the timing control signal 4 is selected, the output data signal 21 is outputted at a timing when the signal becomes "High". Meanwhile, if the signal from the control register 2 is selected, the result of the multiplication and accumulation is outputted from the unit 1 only when this selected signal is "High".

Referring now to Fig. 2, a group or block 22 of the multiplier and accumulator units will be discussed below. Reference numerals 23-30 represent multiplier and accumulator units formed in the structure shown in Fig. 1. In the multiplier and accumulator units 23-30, after 16 bit width data signals 32-39 from a 16 bit width data bus 31 are multiplied with the coefficient signals from the coefficient RAMs inside the respective multiplier and accumulator units 23-30, the signals are cumulated or added to the signals input through a 36 bit width signal line 40 from outside the group 22 or through 36 bit width signal lines 41-47 from the adjacent multiplier and accumulator unit. The result is outputted as 36 bit width output signals 48-55, or a 36 bit width signal 56 through the 36 bit width signal lines 41-47. The 36 bit width output signals 48-55 are sent to a 36 bit width bus 57. Address signals 58-65 are fed from an address bus 66, while 16 bit width data signals 67-74 are fed from a 16 bit width data bus 75, which are used to write the data to the coefficient RAMs or the like within the multiplier and accumulator units 23-30. A timing control signal 76 is input to a controller 77 of group of multiplier and accumulator units. The controller 77 generates timing control signals 78-85 to the multiplier and accumulator units 23-30 in accordance with the combination of the timing control signals 76 input thereto. The timing control signals 78-85 control the timing when the circuits within the multiplier and accumulator units 23-30 are driven. A control signal 86 controls the multiplier and accumulator units 23-30 corresponding to the kind of the image processing.

In an image signal processor shown in Fig. 3, a signal for image processing is input from a 16 bit width input port 87 and a 36 bit width input port 88. A system interface signal 89 controls the image signal processor, consisting of a signal for selecting the kind of the image processing, a clock signal, a signal for controlling write and read to a memory within the processor, etc. A central control circuit 90 generates a signal to control the operation of each circuit within the processor in accordance with the combination of the system interface signals 89. The signal of the central control circuit 90 is sent to each circuit through a control signal line 91.

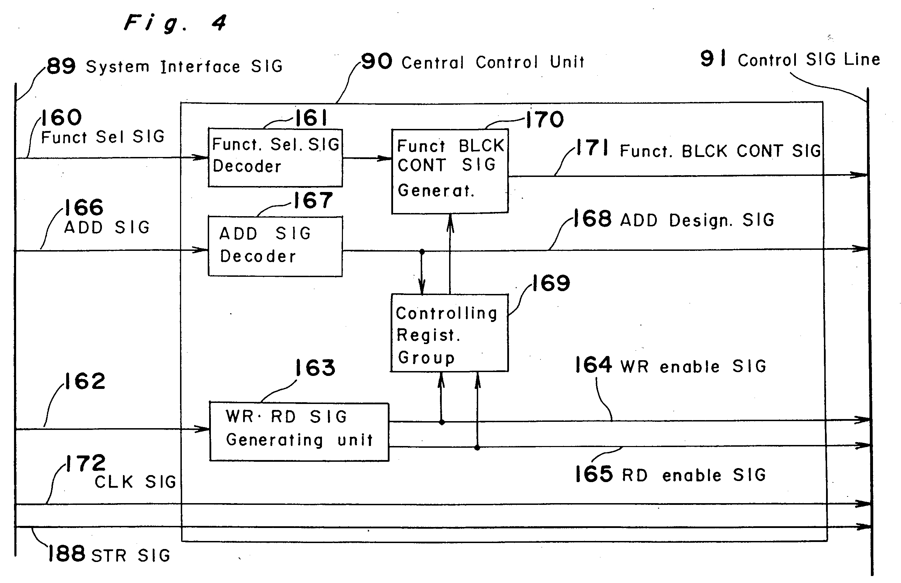

Fig. 4 shows a composition of the central control circuit 90.

Among system interface signals 89 given from outside of the apparatus, a function selection signal 160 is input to a decoder 161 for function selection signal. The decoder outputs a signal indicating that one of functions such as DCT or IDCT of 8 bits $\times$ 8 bits or 16 bits $\times$ 16 bits, FIR filtering, matrix operation of $3 \times 3$ or $4 \times 4$ is selected based on a combination of the function selection signals input thereto. A memory access signal group 162 comprised of chip select signal, READ control signal, WRITE control signal, address strobe signal and data strobe signal among system interface signals 89 is input to WRITE & READ signal generation circuit 163 and the same generates a WRITE enable signal 164 indicating to write data into memories and/ or registers of the image processor and a READ enable signal 165 indicating to read data therefrom corresponding to a combination of signals of the memory access signal group 162. Access to each of memories and registers installed in the image processor is made according to the above two signals 164 and 165 and an access destination designating signal 168 obtained by decoding the address signal 166 by the address signal decoder 167.

A controlling register group 169 is a register group for setting control signals for controlling function blocks and a function block control signal generating circuit 170 generates a function block control signal 171 according to a combination of output signals from the controlling register group 169 and signals generated by the function selection signal decoder 161. Among these signals the signals from the function selection signal decoder 161 are given a priority to realize basic operation of each function. A clock signal 172 is used for a system clock for controlling internal pipe line actions and a processing start signal 188 is a signal for indicating a start of the image processing and the image processor starts the image processing when it is input thereto.

A 16 bit width data bus 92 takes the signal from the input port 88 and a 16 bit width data latch 93 takes the signal from the input port 87. A 36 bit width data latch 94 takes the signal from the 36 bit width input port 88. An address register 95 takes and sends the address signal to the coefficient RAMs and resister 2 of each M & A unit or the like in the processor through an address line 96. A subtraction and clipping unit 97 obtains the difference between the signal from the input port 87 and the signal from the input port 88 thereby to clip the difference to the maximum and minimum reference values set in a register thereinside.

Accordingly, the kind of the processing is alterable corresponding to the kind of the image processing by a control signal 171 from the central control circuit 90. There are 6 kinds of processing, i.e., 6 kinds of combinations among the execution or inexecution of an operation to obtain the difference, the execution or inexecution of the clipping processing, and whether the reference value for the clipping treatment is a fixed value or any optional value set outside the processor.

The signal processed by the subtraction and clipping unit 97 is sent to a variable length delay circuit 98 and delayed for a delay time designated from outside of the image processor.

The 16 bit width data bus 99 transmits a signal processed in the variable length delay circuit 98 to a group 100 of multiplier and accumulator units. A 16 bit width tri-state driver 101 outputs the signal of the 16 bit width data bus 99 to a 16 bit width data bus 102 when the control signal from the central control unit 90 is turned "High". The 16 bit width data bus 102 in turn transmits the signal to a group 103 of multiplier and accumulator units.

A 36 bit width signal line 104 transmits a signal from the 36 bit width data latch 94 to the group 100, and a 36 bit width bus 104 transmits a signal outputted from the group 100.

A clipping and rounding unit 106 clips a signal from the 36 bit width bus 105 to round into a 16 bit width signal. The execution of a procissing in the clipping and rounding 106 unit is controlled by the control signal generated from the central control circuit 90 in accordance with the kind of the image processing. An output signal from the clipping and rounding unit 106 is written into a dual-port RAM 107. To write in and read from the dual-port RAM 106 is controlled by a signal generated in a dual-port RAM control circuit 108. A timing signal generator 109 feeds a timing signal to the groups 100 and 103 of multiplier and accumulator units and also to the dual-port RAM control circuit 108. The generating timing of the timing signal is firm wared so that it can be switched in correspondence to the kind of the image processing by the control signal from the central control circuit 90.

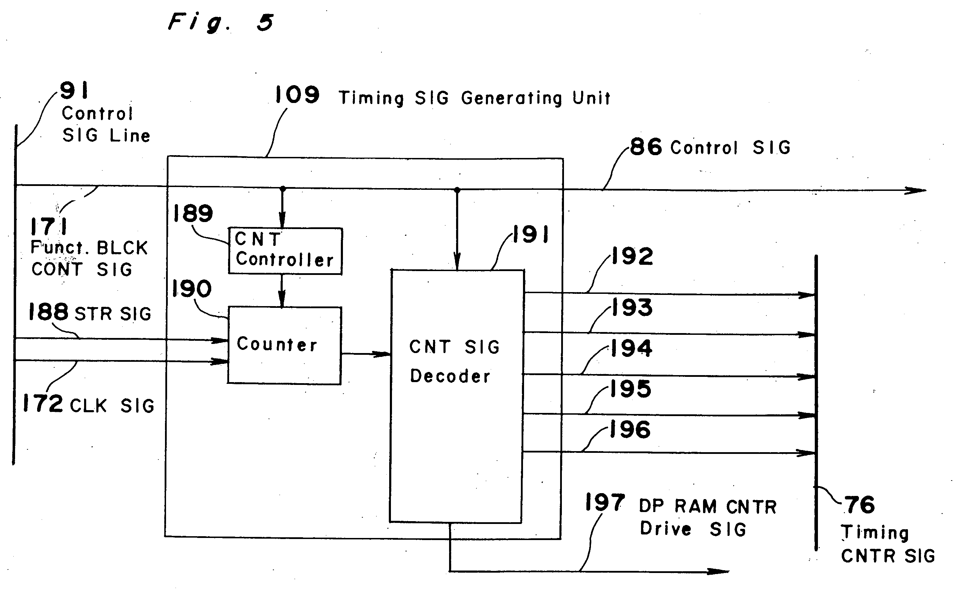

Fig. 5 shows a composition of the timing signal generating unit 109.

This unit 109 is comprised of a counter 190, a count controller 189 for controlling the counter 190 and a count signal decoder 191.

The count controller 189 is comprised of a combined logic circuit enabling to form a counter suitable for every processing in accordance with a function block control signal 171 input through a control signal line 91 and generates a control signal to control the counter 190. For instance, the counter 190 acts as a synchronous counter of eight cycles in the case of an orthogonal transform of $8 \times 8$ and, in the case of a matrix operation of $4 \times 4$, as a synchronous counter of four cycles. The counter 190 starts a counting when a processing start signal 188 for indicating start of the processing and counts up in synchronization with clock signals 172. The count signal decoder 191 generates timing control signals 192 to 196 according to count signals outputted from the counter 190 as follows. The 16 bits $\times$ 16 bits paraller multiplier input control signal 192 becomes enable upon the matrix operation processing which controls to fetch a 16 bits signal 10 for the 16 bits $\times$ 16 bits parallel multiplier 9 and each bit thereof is sent to each multiplier and accumulator unit of the multiplier 9. Fetch of the 16 bits signal 10 is prohibited during this signal is "High".

9

If the matrxix operation processing is not demanded, the count signal decoder 191 maintains this signal in a "Low" level in response to the function block control signal 171.

The address signal 193 for reading the coefficient RAM is a four bits signal which is sent to all of the multiplier and accumulator units to alter a coefficient reading address periodically upon orthogonal transform or inverse transform. This signal 193 is transmitted from the coefficient RAM reading control circuit 8 to the 16 words $\times$ 16 bits coefficient RAM 7 and, thereby, a coefficient signal at an address of the coefficient RAM 7 designated is input to the 16 bits $\times$ 16 bits parallel multiplier. For instance, in the case of DCT of 8 $\times$ 8, eight addresses from (0000) to (0111) are read out periodically. In the processing other than the orthogonal transform, an address signal input to the controlling register group 169 in the central control circuit 90 from outside of the processor is outputted as the coefficient RAM reading address signal through the function block selection signal 171 and, accordingly, a coefficient signal at a fixed address is outputted therefrom.

The 3 inputs and 1 ouptut selector control signal 194 is a signal of 2 bit width corresponding to each multiplier and accumulator unit for controlling the output of the 3 inputs and 1 output selector 13 to control three addition nodes at the 36 bits adder 12. The 36 bits register control signal 195 is a signal of one bit per each multiplier and accumulator unit to control fetch of signals to the output register of 36 bits width. Each signal is fetched when this signal becomes "High" at a rise of the clock signal. For instance, in the case of 8 $\times$ 8 DCT, a resultant sum is fetched to the 36 bits register 18 at a timing when an accumulative addition operation of eight times is completed and, to realize a digital filter, this signal is always maintained in a "High" level.

The 36 bits tri-state driver control signal 196 is a signal of one bit per each multiplier and accumulator unit and is used for controlling the 36 bits tris-state driver 19 provided to output the signal fetched in the 36 bits register 18 to a 36 bits bus 57. When this signal is "High", the signal of the 36 bits register 18 is outputted to the 36 bits bus 57. For instance, in the case of 8 $\times$ 8 DCT, the signal fetched in the register 18 is outputted sequentially from each one of eight multiplier and accumulator units at each one of eight cycles.

Further, in the case of the digital filtering processing, a signal from the control register 2 is given a priority than the driver control signal 196 transmitted through the timing signal 4 by a signal 3 for performing control of the kind of the image processng which is one of the function block control signal 171 given through the control signal 86, and the output of signal from the tri-state driver 19 by making the designated address of the register "High". Thus, timing actions in each multiplier and accumulator unit are controlled in a firm-wared manner by these control signals above mentioned.

Further more the timing signal generating circuit 109 generates a drive signal 197 indicating to start writing into and reading from the dual-port RAM and the signal 197 is sent to the dual-port RAM controller 107.

A 36 bit width data line 110 transmits the signal from the group 100 to the group 103. When the control signal from the central control circuit 90 is "High", a 36 bit width tri-state driver 111 sends a signal of the 36 bit width bus 105 to a 36 bit width data bus 112. A 36 bit width signal line 113 transmits the signal from the 36 bit width data latch 94 to a clipping, rounding and adder unit 114. The clipping, rounding and adder unit 114 clips the signal transmitted from the 36 bit width data bus 112 to a reference value set in a register thereinside, and then carries out rounding or addition to the signal input from the 36 bit width signal line 104. The kind of the processing in the clipping, rounding and adder unit 114 is possible to be changed corresponding to the kind of the image processing by the control signal from the central control circuit 90. That is, there are nine kinds of processing, the presence or absence of the execution of the clipping treatment, whether a fixed value is used or an optional value is set from outside the processor as the reference value for clipping processing, and whether the rounding processing is executed, or addition is performed or neither is carried out.

Upon outputting an operaiton output of 36 bit width after rounding into a signal of 16 bit width, the clipping and rounding are made to a signal comprised of upper 17 bits from the lowest bit which is designated as a rounding position from outside of the processor.

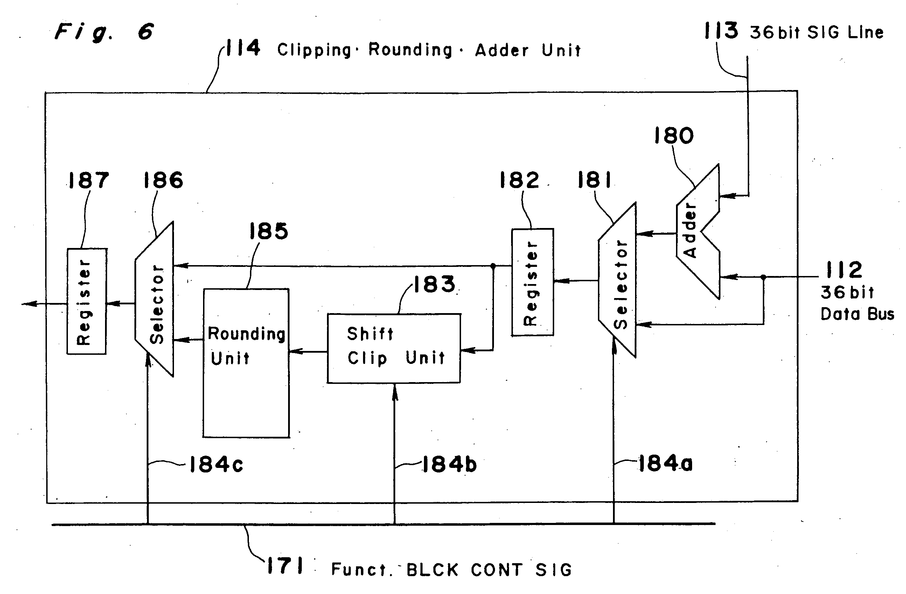

Fig. 6. shows a composition of the clipping rounding and adder unit 114.

A signal through the 36 bit data bus 112 is added to a signal through 36 bit data bus 113 by an adder 180. The result of addition is sent to a selector 181. The selector 181 outputs either of the result of addition or the signal before the addition in accordance with a signal 184a from the control line 91.

When the result of addition is selected, an adaptive processing (addition operation) is realized.

Registers 182 and 187 are provided for the pipe line processing and a signal fetched in the register 182 is transmitted to a shift clip unit 183 and a selector 186. The shift clip unit 183 performs a shift processing of 17 bits after designating the lowest bit to the rounding position designated from outside.

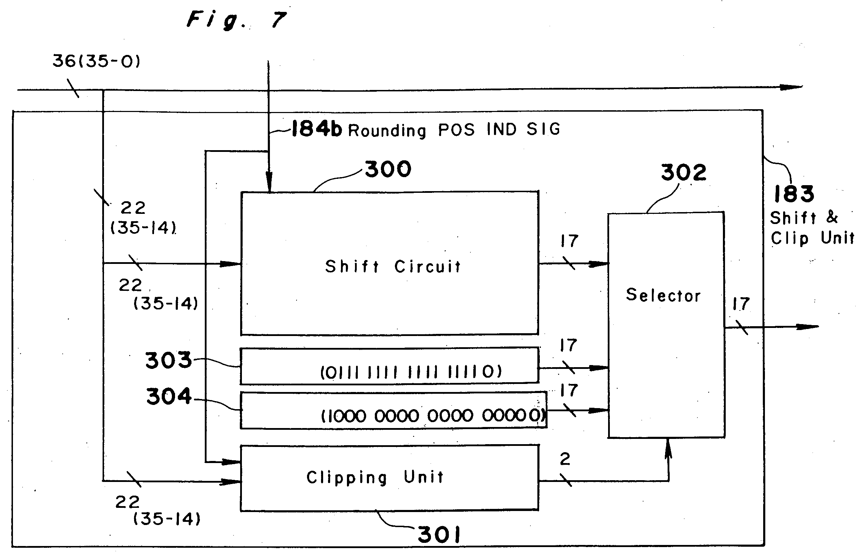

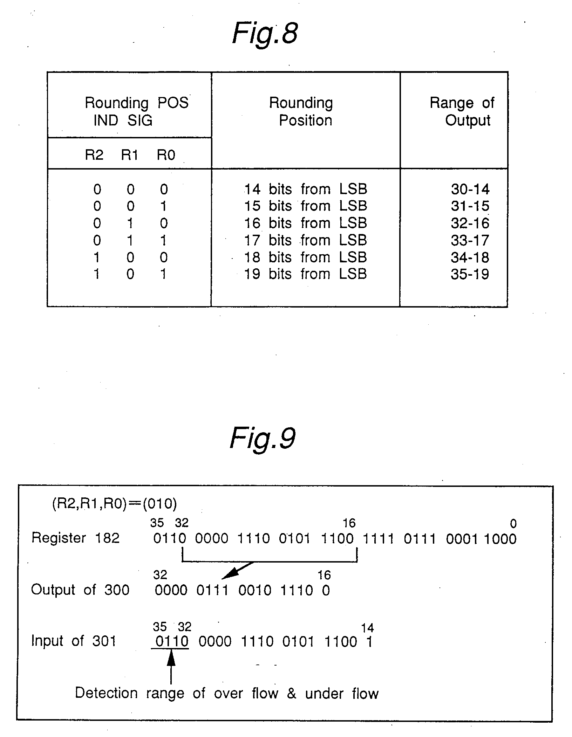

The operation of the shift clip unit 183 is explained referring to Figs. 7 and 8 which illustrate a concrete composition thereof and operation thereof in the case that a rounding position indicating signal 184 is given, respectively.

In Fig. 7, into a shift circuit 300, upper 22 bits of the 36 bit signal sent from the register 182 (from 35-th bit to 14-th bit when LSB is zero-th bit) is fetched and a signal comprised of upper seventeen bits from the rounding position designated by the rounding position indicating signal 184 is outputted from the shift circuit 300, as shown in Fig. 7.

Since there may be caused overflow or underflow, it becomes necessary to perform a clipping processing by a clip unit 301. This clip unit 301 detects overflow or underflow by signals outputted from the highest bit.

The method for detecting overflow or underflow is explained referring to Fig. 9 wherein illustrates an example of detection using signals from 35-th to 32-th bits.

If 35-th bit is zero and all of 34-th to 32-th bits are zoro, it is decided that there is no overflow. If 35-th bit is zero but either one of 34-th to 32-th bit is not zero, it is decided that there is caused an overflow.

Similarly, if 35-th bit is one and all of 34-th to 32-th bits are one, it is decided that there is no underflow. But, if either one of 34-th to 32-th bits is one provided that 35-th bit is one, it is decided that there is caused an underflow.

When other rounding position designated, the same method can be uded only detection range changing.

In the example illustrated in Fig. 9, since 35-th bit is zero and 34-th and 33-th bits are one, there is caused an overflow.

The detection signal of overflow or underflow is outputted to a selector 302 as a control signal. The selector 302 outputs selectovely the output signal from the shift circuit 300 and, when detected an overflow, outputs the maximum value 303. If an underflow is detected, it outputs the minimum value 304.

Returning to Fig. 6 a rounding unit 185 adds "1" to the lowest bit of the output from the shift clip circuit 183 and outputs a signal of 16 bits except for the lowest bit to a selector 186. The selector 186 outputs selectively either of a 36 bit signal or the rounded 16 bit signal to a register 187 is response to a control signal 184c sent through the control signal line. The signal from the register 187 is outputted through the 36 bit signal output port 115 to outside of the processor.

It becomes possible "when used the clipping • rounding and adder unit 114, " to prevent the operation precison from lowering due to a variety of coefficient values upon performing various image processiings.

Among several kinds of image processing made by the image signal processor of the present invention, the operation when $N \times N$ DCT processing is performed will be described first.

$N \times N$ DCT processing to a matrix U of image signals representing a negative number expressed by two's complements in the L bit width, namely,

$$U = \{U(m,n), \; 0 \le m, \; n \le N-1\},$$
$$U(m,n) = \sum_{i=0}^{L-1} a_i(m,n) \cdot 2^i,$$
$$a_{L-1}(m,n) \in [0,-1], a_i(m,n) \in [0,1] \; (0 \le i \le L-1), 0 \le m, n \le N-1$$

can be represented by a formula (16) by using a transformation matrix C, i.e.,

$$C\{c(n,j) = (\frac{1}{N})^{1/2} [j=0, 0 \le n \le N-1], (\frac{2}{N})^{1/2} \cdot$$
$$\cos(\frac{\pi(2n+1)j}{2N}) [1 \le j \le N-1, 0 \le n \le N-1]\}$$

$$V = C^t U C \qquad\qquad (16)$$

wherein V is a matrix resulting from the DCT processing and $C^t$ is a transposed matrix of C.

The formula (16) can be rewritten as follows by using double summation;

$$v(k,j) = \sum_{m=0}^{N-1} \sum_{n=0}^{N-1} c'(m,k) \cdot u(m,n) \cdot c(n,j) \qquad (17)$$

A transformation coefficient c'(m,k) of $C^t$ is expressed as follows by a transformation coefficient c(n,j) of C;

c'(m,k) = c(k,m)     (18)

Therefore, the formula (17) will become;

$$v(k,j) = \sum_{m=0}^{N-1} \sum_{n=0}^{N-1} c(k,m) \cdot u(m,n) \cdot c(n,j) \qquad (19)$$

It is possible to calculate the formula (19) separately for each summation with respect to m and n, and therefore, assuming the following equation, it is expressed as follows;

$$v(m,j) = \sum_{n=0}^{N-1} u(m,n) \cdot c(n,j) \qquad (20)$$

$$v(k,j) = \sum_{m=0}^{N-1} c(k,m) \cdot v(m,j) \qquad (21)$$

In other words, v(m,j) is calculated by using the formula (20) and the result is substituted into the formula (21), thereby the transform according to the formula (16) is executed.

The formula (20) can be developed, as follows;

$$v(m,j) = \sum_{n=0}^{N-1} u(m,n) \cdot c(n,j)$$
$$= u(m,0) \cdot c(0,j) + u(m,1) \cdot c(1,j) + \ldots$$
$$\ldots + u(m,N-1) \cdot c(N-1,j) \qquad (22)$$

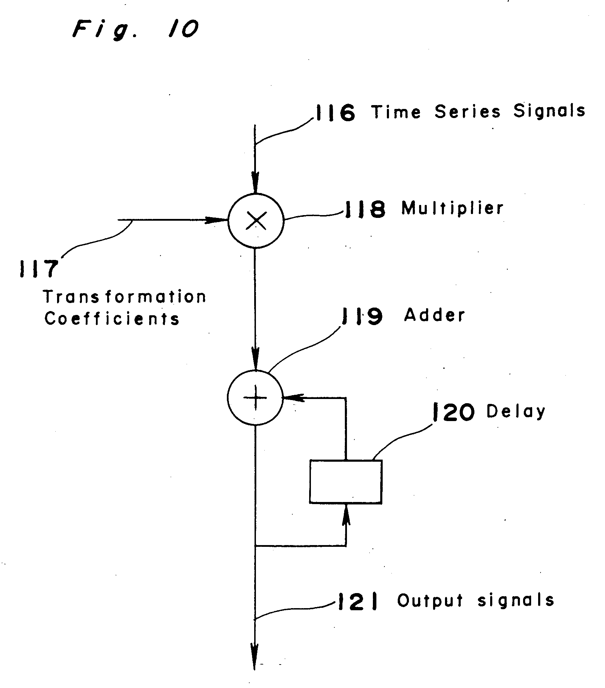

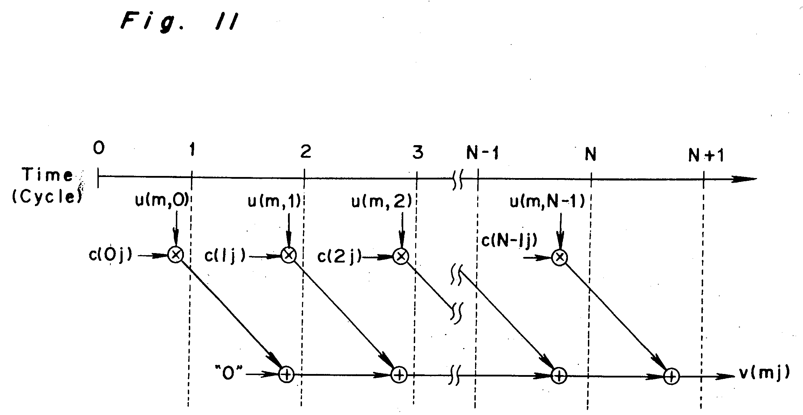

Accordingly, v(m,j) in the formula (22) can be obtained if N transformation coefficients Cj = {c(0,j), c(1,j), ...., c(N-1,j), (0≦j≦N-1)} are stored into a memory circuit beforehand, and the value of an element c(x,j) of the transformation coefficients Cj corresponding to each item in the formula (22) is read and multiplied to N input time series signals Um = {u(m,0), u(m,1), ..., u(m,N-1), (0≦m≦N-1)}, and the obtained values are cumulated up to the last item. The above operation is realized by the circuit structure shown in Fig. 10. The time series signals 116 are input sequentially from u(m,0), u(m,1), ... to u(m,N-1) for every cycle, and the transformation coefficients 117 are sequentially read out from the memory circuit or the like from c(0,j) to c-(N-1,j) for every cycle to be multiplied in a multiplier 118. The result of the multiplication is input to an adder 119 at the next cycle. An output from the adder 118 is delayed one cycle at a delay 120 and returned to the adder 119, where the output is added to the result of the multiplication one cycle after. The signal from the delay 120 is initialized to "0" at the first multiplication time. After the above procedure is repeated N times, the result, namely, an output signal 121 is outputted. Fig. 11 illustrates the above procedure in time sequence.

Similarly, $\nu$(k,j) in the formula (17) can be calculated by multiplying each of N transformation coefficients Ck = {c(k,0), c(k,1), ...., c(k,N-1), (0≦k≦N-1)} stored beforehand in a memory circuit to N numerical values Vj = {v(0,j), v(1,j), ..., v(N-1),j), (0≦j≦N-1)} obtained in the manner as above and obtaining the summation of the values. Since the calculating method is totally identical to the method of v(m,j) described above, this operation alike is realized by the circuit structure of Fig. 10.

The foregoing procedure will be expressed by the following matrix;

$$v = C^t U C$$

$$= \begin{bmatrix} c(0,0) & c(1,0) & \cdots & c(N-1,0) \\ c(0,1) & \cdot & & \cdot \\ & \cdot & \cdot & \cdot \\ & \cdot & \cdot & \cdot \\ & \cdot & \cdot & \cdot \\ c(0,N-1) & \cdot & \cdots & c(N-1,N-1) \end{bmatrix}$$

$$\times \begin{bmatrix} u(0,0) & u(0,1) & \cdots & u(0,N-1) \\ u(1,0) & \cdot & & \cdot \\ & \cdot & \cdot & \cdot \\ & \cdot & \cdot & \cdot \\ & \cdot & \cdot & \\ u(N-1,0) & \cdot & \cdots & u(N-1,N-1) \end{bmatrix}$$

$$\times \begin{bmatrix} c(0,0) & c(0,1) & \cdots & c(0,N-1) \\ c(1,0) & \cdot & & \cdot \\ & \cdot & \cdot & \cdot \\ & \cdot & \cdot & \cdot \\ & \cdot & \cdot & \cdot \\ c(N-1,0) & \cdot & \cdots & c(N-1,N-1) \end{bmatrix}$$

$$= \begin{bmatrix} c(0,0) & c(1,0) & \cdots & c(N-1,0) \\ c(0,1) & \cdot & & \cdot \\ & \cdot & \cdot & \cdot \\ & \cdot & \cdot & \cdot \\ & \cdot & \cdot & \cdot \\ c(0,N-1) & \cdot & \cdots & c(N-1,N-1) \end{bmatrix}$$

$$\times \begin{bmatrix} v(0,0) & v(0,1) & \cdots & v(N-1,0) \\ v(0,1) & \cdot & & \cdot \\ & \cdot & \cdot & \cdot \\ & \cdot & \cdot & \cdot \\ & \cdot & \cdot & \cdot \\ v(0,N-1) & \cdot & \cdots & v(N-1,N-1) \end{bmatrix}$$

$$= \begin{bmatrix} v(0,0) & v(1,0) & \cdots & v(N-1,0) \\ v(0,1) & \cdot & & \cdot \\ & \cdot & \cdot & \cdot \\ & \cdot & \cdot & \cdot \\ & \cdot & \cdot & \cdot \\ v(0,N-1) & \cdot & \cdots & v(N-1,N-1) \end{bmatrix} \qquad (23)$$

Actually, the matrix is operated through serial computing, and $N^2$ time series signals,

13

$$u(t)\ \{u(t)=\sum_{i=0}^{L-1} a_i(t).2^i, a_{L-1}(t)\in[0,-1],$$
$$a_i(t)\in[0,1]\ (0\le i\le L-1),0\le t\le N^2-1\}$$

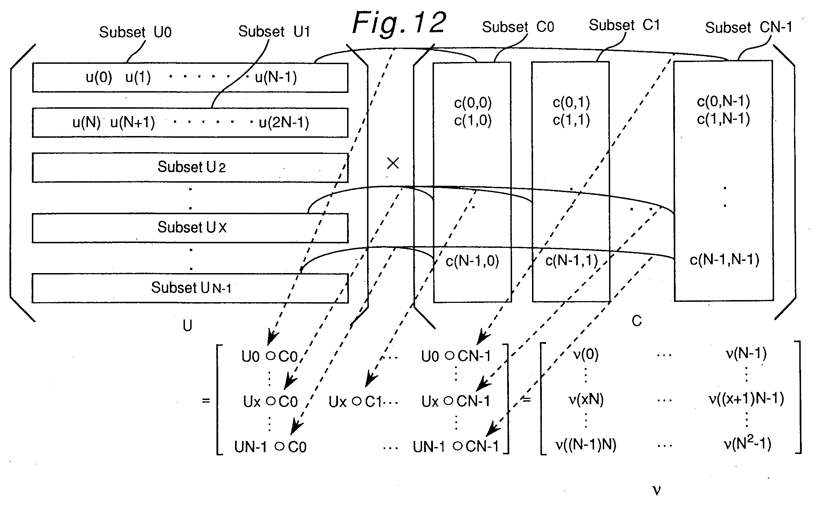

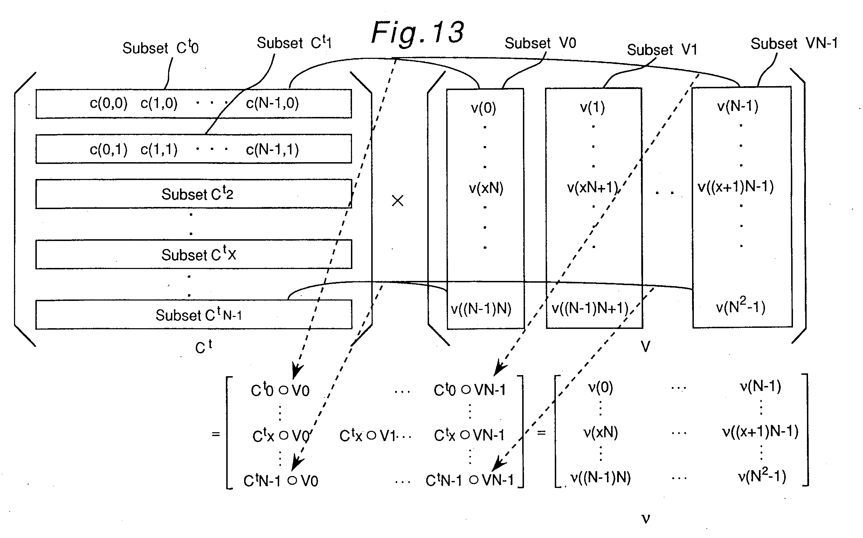

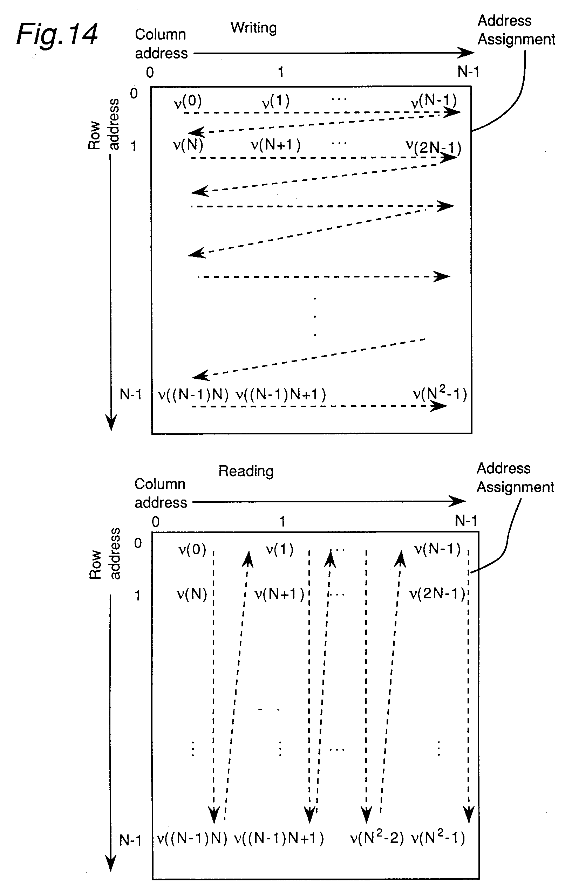

are processed as one set. Therefore, in order to operate UxC, it is necessary to divide the $N^2$ time series signals u(t) to N sub sets each consisting of N elements, that is, $Ui=\{u(x),i.N\le x\le(i+1)^\bullet N-1,0\le i\le N-1\}$. Moreover, each column of the matrix of transformation coefficients C is regarded as one sub set $Cj=\{c(0,j)-,c(i,j), ..., c(N-1,j), 0\le j\le N-1\}$. The reason for this is that the multiplying method of the matrix is constituted by operations of rows and columns as shown in Fig. 12, and therefore it becomes necessary to regard the row or column as a unit. As is understood from Fig. 12, a sub set $U_x$ containing the time series signals U(t) is operated with each of N sub sets Co, C1, ..., $C_{N-1}$ of the matrix of transformation coefficients C. In other words, when values of N sub sets C0, C1, ..., $C_{N-1}$ are stored in the corresponding memory devices of N circuits in the construction shown in Fig. 4 and if the operation of the sub set $U_x$ of the time series signals with each sub set of the matrix of transformation coefficients C is performed in parallel, processing becomes possible with higher speeds. The result of the operation in the circuits to the sub set $U_x$ is time-divided to be outputted as N time series signals v(t), $(x.N\le t\le(x+1).N-1)$. The operation of UxC is thus completed when the above procedure is performed for all of the sub sets of the time series signals. And, the result is outputted as the time series signals v(t), $(0\le t\le N^2)$. Subsequently, as indicated in Fig. 13, a sub set comprised of a row of the transposed matrix $C^t$ of the matrix of transformation coefficients and a sub set comprised of a column of the matrix V which is an intermediate result obtained through operation of UxC should be operated so as to operate $C^txU$. For this purpose, it is necessary that the time series signals V(t) obtained at the first operation are, as shown in Fig. 14, written sequentially into the memory device from an address 0 to an address $N^2-1$ and read out sequentially from the address 0, an address N, ... an address N.(N-1), an address 1, an address N+1, ..., an address N.(N-1)+1, ....., an address N-1, an address 2N-1, ..., to the address $N^2-1$. The sub set of the matrix V is possible to be operated according to the above reading method. The result is time-divided similar to the aforementioned case of the time series signals V-(t), and output as $N^2$ time series signals $\nu(\tau)(0\le\tau\le N^2-1)$.

N × N IDCT processing is easily effected in the same manner as N × N DCT processing by changing the matrix of transformation coefficients to a matrix of inverse transformation coefficients.

The structure and operation of the image signal processor when it is utilized for 8 × 8 DCT processing and 16x16 DCT processing in the above manner will be discussed below. Since 8 × 8 IDCT processing and 16 × 16 IDCT processing are realized by changing the transformation coefficients and inputting signals subjected to DCT processing in place of the image signals, the detailed description will be abbreviated here. That is, the same structure and operation as of the DCT processing will do for the IDCT processing except that the transformation coefficients should be changed and a referential signal should be added to an output signal instead of calculating the difference between the input and referential signals for the case of an adaptive processing.

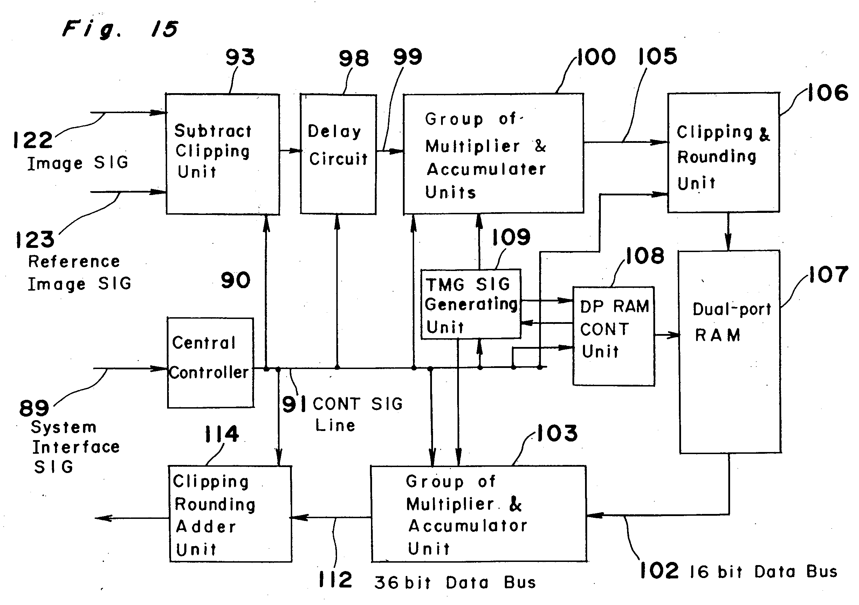

The structure of an image signal processor adapted to 8 × 8 DCT processing is indicated in Fig. 15. Since almost all of the components in the drawing are identical to those explained with reference to Figs. 1 through 3, the components are designated by the same reference numerals and the description thereof will be omitted. If the combination of the signals for selecting the kind of the image processing among the system interface signals 89 of Fig. 3 is set for 8 × 8 DCT processing, the structure of Fig. 15 is constituted by turning the 16 bit width tri-state driver 101 and 36 bit width tri-state driver 111 to be shut off by the control signal generated in the central control circuit 90. Details of the 8 × 8 DCT processing at this occasion will be discussed below.

A 16 bit width image signal 123 is taken from the 16 bit width data latch 93 and, a 16 bit width referential image signal is taken in from the 36 bit width data latch 94. These signals are input to the subtraction and clipping unit 97 for every one cycle of a system clock. In performing the adaptive DCT processing, the difference between the 16 bit width image signal 123 and 16 bit width referential image signal 124 is calculated in the subtraction and clipping unit 97 and thereafter the clipping processing is carried out. In the case of the inadaptive DCT processing, only the clipping processing is performed. A reference value for the clipping processing may be alternatively a fixed value or a value optionally set from outside the processor. The image signal output from the subtraction and clipping unit 97 is input to the variable length delay circuit 98. Upon executing the DCT processing, the delay amount of the delay circuit 98 is set at zero by the signal for selecting the kind of processing. The output from the delay circuit 98 is input simultaneously to eight multiplier and accumulator units within the group 100 through the 16 bit width data bus 92. Before the 8 × 8 DCT processing is started for the image signal, however, it is necessary to write every eight values of sub sets consisting of every column of the matrix $C_8$ of the transformation coefficients of the 8 × 8 DCT processing into the coefficient RAMs of the multiplier and accumulator units. At this time, each multiplier and accumulator unit is driven in a manner as will be described below with reference to Fig. 1 with a timing tabulated in Table 1.

Table 1-1

| System clock(cycle) | 16 bit image signal 121 | 16 bit data bus 98 | Multiplier and accumulator unit-1 | |
|---|---|---|---|---|
| | | | Output from coefficient RAM | Result of multiplier |
| 1 | u(0) | | | |
| 2 | u(1) | | | |
| 3 | u(2) | u(0)' | c(0,0) | |
| 4 | u(3) | u(1)' | c(1,0) | |
| 5 | u(4) | u(2)' | c(2,0) | u(0)'xc(0,0) |
| 6 | u(5) | u(3)' | c(3,0) | u(1)'xc(1,0) |
| 7 | u(6) | u(4)' | c(4,0) | u(2)'xc(2,0) |
| 8 | u(7) | u(5)' | c(5,0) | u(3)'xc(3,0) |
| 9 | u(8) | u(6)' | c(6,0) | u(4)'xc(4,0) |
| 10 | u(9) | u(7)' | c(7,0) | u(5)'xc(5,0) |
| 11 | u(10) | u(8)' | c(0,0) | u(6)'xc(6,0) |
| 12 | u(11) | u(9)' | c(1,0) | u(7)'xc(7,0) |
| 13 | u(12) | u(10)' | c(2,0) | u(8)'xc(0,0) |
| 14 | u(13) | u(11)' | c(3,0) | u(9)'xc(1,0) |
| 15 | u(14) | u(12)' | c(4,0) | u(10)'xc(2,0) |
| 16 | u(15) | u(13)' | c(5,0) | u(11)'xc(3,0) |
| 17 | u(16) | u(14)' | c(6,0) | u(12)'xc(4,0) |
| 18 | u(17) | u(15)' | c(7,0) | u(13)'xc(5,0) |

| 19 | u(18) | u(16)' | c(0,0) | u(14)'xc(6,0) |
|----|-------|--------|--------|---------------|
| 20 | u(19) | u(17)' | c(1,0) | u(15)'xc(7,0) |
| 21 | u(20) | u(18)' | c(2,0) | u(16)'xc(0,0) |
| 22 | u(21) | u(19)' | c(3,0) | u(17)'xc(1,0) |
| 23 | u(22) | u(20)' | c(4,0) | u(18)'xc(2,0) |
| 24 | u(23) | u(21)' | c(5,0) | u(19)'xc(3,0) |
| 25 | u(24) | u(22)' | c(6,0) | u(20)'xc(4,0) |
| 26 | u(25) | u(23)' | c(7,0) | u(21)'xc(5,0) |

Table 1-2

| System clock (cycle) | Multiplier and accumulator unit-1 | | | | Output of multiplier and accumulator group 99 |
|---|---|---|---|---|---|
| | Output of selector | Output of adder | Tri-state driver | | |
| | | | Input | Output | |
| 1 | | | | High impedance | |
| 2 | | | | High impedance | |
| 3 | | | | High impedance | |
| 4 | | | | High impedance | |
| 5 | | | | High impedance | |
| 6 | "0" | (0) | | High impedance | |
| 7 | (0) | (1) | | High impedance | |
| 8 | (1) | (2) | | High impedance | |
| 9 | (2) | (3) | | High impedance | |
| 10 | (3) | (4) | | High impedance | |
| 11 | (4) | (5) | | High impedance | |
| 12 | (5) | (6) | | High impedance | |
| 13 | (6) | (7) | | High impedance | |

| 14 | "0" | (0) | v(0) | v(0) | v(0),1 |
|----|-----|-----|------|------|--------|
| 15 | (0) | (1) | v(0) | High impedance | v(1),2 |
| 16 | (1) | (2) | v(0) | High impedance | v(2),3 |
| 17 | (2) | (3) | v(0) | High impedance | v(3),4 |
| 18 | (3) | (4) | v(0) | High impedance | v(4),5 |
| 19 | (4) | (5) | v(0) | High impedance | v(5),6 |
| 20 | (5) | (6) | v(0) | High impedance | v(6),7 |
| 21 | (6) | (7) | v(0) | High impedance | v(7),8 |
| 22 | "0" | (0) | v(8) | v(8) | v(8),1 |
| 23 | (0) | (1) | v(8) | High impedance | v(9),2 |
| 24 | (1) | (2) | v(8) | High impedance | v(10),3 |
| 25 | (2) | (3) | v(8) | High impedance | v(11),4 |
| 26 | (3) | (4) | v(8) | High impedance | v(12),5 |

N.B. (n) in items of "Output of selector" and "Output of adder" represents the range of summation from i=0 to n. n in "v(t),n" indicates an output from the n-th multiplier and accumulator unit.

The input signal is multiplied in the multiplier 9 of the unit with the first coefficient in each sub set read by the signal from the RAM read control circuit 8. The result of the multiplication is input to the accumulator 12 at the next cycle and added to the initial value "0" from the 3 inputs 1 output selector 13 (first accumulation). At this time, the succeeding image signal is being multiplied with the second coefficient of the sub set in the multiplier 9. Then, the result of the second multiplication in the multiplier 9 is added to the result of the first accumulation in the accumulator 12 at the next cycle (second accumulation). During this time, the coming image signal is multiplied with the third coefficient of the sub set in the multiplier 9. The accumulation in the above manner is subsequently repeated another six times. When the multiplication to eight input signals of the sub set is finished, the RAM read control circuit 8 is reset thereby to start reading from the first coefficient of a sub set at the next cycle. At the same time, the result of eight accumulations is taken into the 36 bit width register 18, which is output to the clipping and rounding unit 106 sequentially from one multiplier and accumulator unit every one cycle while the next eight accumulations are being carried out. At the cycle succeeding the cycle when the RAM read control circuit 8 is reset, "0" signal 16 for initialization purpose is selected among the outputs of the 3 inputs 1 output selector 13, thereby starting accumulation again. To reset, taking-in of signals and outputting for every eight cycles are controlled by the timing control signal 4.

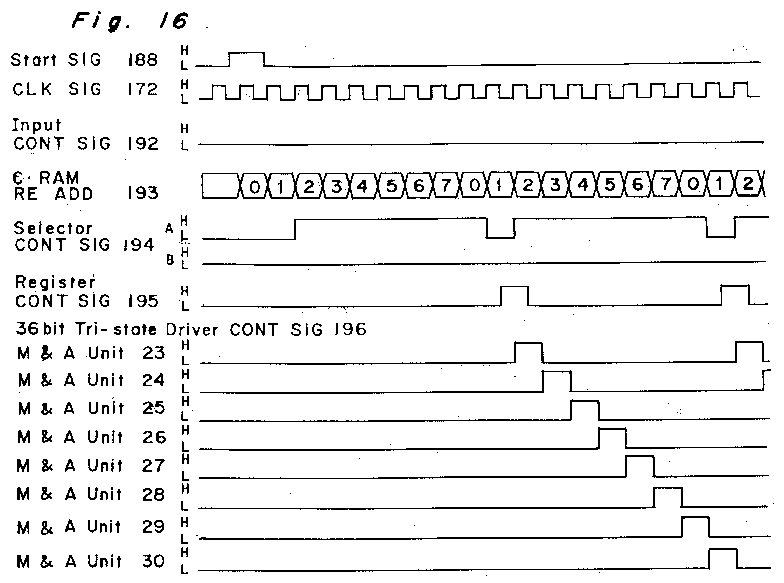

In Fig. 16, there is illustrated a time chart of respective timing control signals included in a timing signal 4 upon executing 8 × 8 DCT processing.

Returning to Fig. 15, the output data from the clipping and rounding unit 106 is written into the dual-ports RAM 107 in such a manner that the address signal generated in the dual-ports RAM control circuit 107 is counted every one cycle from the address 0 to the address 63 as shown in Fig. 8. After the 64 data is completely written, data is started to be read out from the dual-port RAM 107. In other words, the address signal formed in the dual-ports RAM control circuit 108 is, as shown in Fig. 14, sent to the address 0, address 8, address 16, ..., address 56, address 1, address 9, address 17, ......, address 7, ..., address 55 and address 63 sequentially in this order. The data sequentially read from each address is input concurrently to eight multiplier and accumulator units within the group 103. It is to be noted here that eight values of sub sets formed of each column of the transposed matrix of the matrix of transformation coefficients of 8 × 8 DCT processing are primarily input in the coefficient RAMs within the multiplier and accumulator units. The multiplication and accumulation in the group 103 is completely the same as is performed in the group 100 and therefore, the description thereof will be omitted. In applying the instant image signal processor to 8 × 8 DCT processing of real time image signals, simultaneously when the data is started to be read out from the dual-ports RAM 107, the result of the operation of the next image signal is started to be written. Writing in this case is carried out from the address 64 of the dual-ports RAM 107 to the address 127 sequentially. Reading is carried out from the address 64, address 72, ..., address 120, address 65, address 73, ..., address 121, ....., address 119 to the address 127 in the same manner as above (the address assignment in Fig. 14 is moved in parallel by 64 addresses). Writing from the address 0 and that from the address 64 are alternately carried out, so that 8 × 8 DCT processing is achieved real time. The result is output to the 36 bit width data bus 112 from one multiplier and accumulator unit for every cycle and input to the clipping, rounding and adder unit 114. When 8 × 8 DCT processing is selected, the clipping processing is performed to the signal subjected to DCT processing by using either a fixed value or an optional value set from outside the processor as a reference value, and the signal after the clipping processing is subjected to rounding processing into a 16 bit width signal and output from the unit 114.

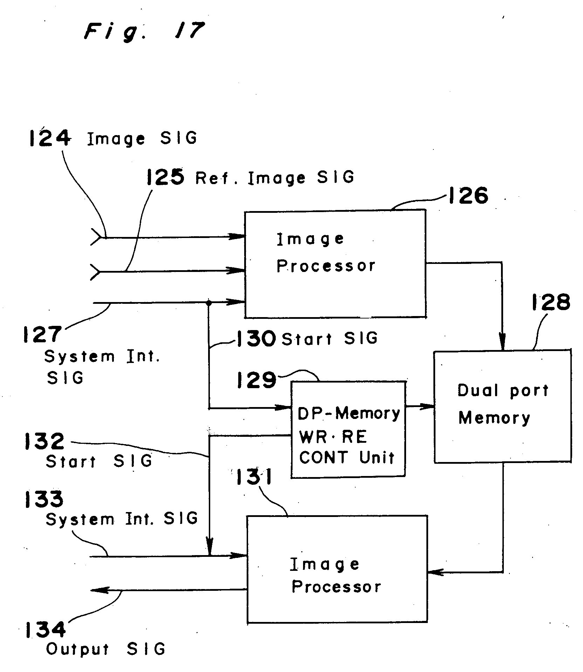

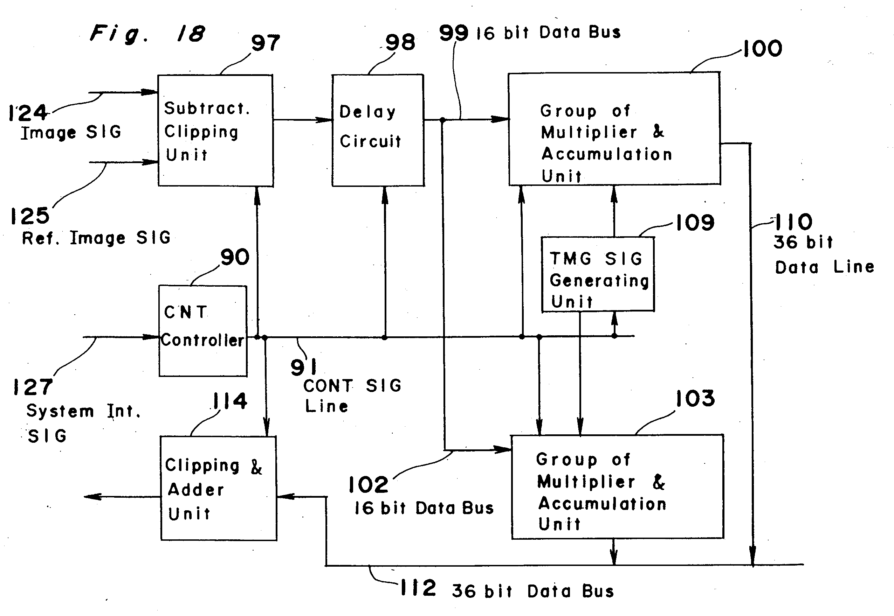

Fig. 17 shows the structure of an image signal processor when 16 × 16 DCT processing as a second example is performed. The image signal processor will operate as follows. Both a 16 bit width image signal input 124 and a 16 bit width referential image signal input 125 are input to an image signal processor 126 of the present embodiment. The image signal processor 126 is constructed in such structure as shown in Fig. 18, wherein signals selecting the kind of the image processing among the system interface signals 127 are a combination of signals to select the 16 × 16 DCT processing. The structure of the image signal processor 126 is realized by activating the 16 bit width tri-state driver 101 and 36 bit width tri-state driver 111 of Fig. 3 and turning the clipping and rounding unit 106 and dual-ports RAM 107 into the inoperative state. In addition, it is necessary to write every 16 values of sub sets consisting of each column of the matrix $C_{16}$ of the transformation coefficients into each coefficient RAM of the image signal processor 126 before the DCT processing is started. The operation within the image signal processor 126 will now be explained with reference to Fig. 18. The 16 bit width image signal input 124 and 16 bit width referential image signal input 125 of Fig. 17 are input to the subtraction and clipping unit 97, where, in the case of the adaptive DCT processing, the difference of the signals is calculated before the clipping processing. In the case of the inadaptive DCT processing, only the clipping processing is performed. It is possible to select one of a fixed value and a value set optionally from outside the processor as a reference value for the clipping processing. The output signal from the subtraction and clipping unit 97 is input, via the variable length delay circuit 98 set at "0", simultaneously to the multiplier and accumulator units within the groups 100 and 103 through the 16 bit width data buses 99 and 102. The operation of each multiplier and accumulator unit will be described with reference to Fig. 1, the timing of which is indicated in Table 2.

Table 2-1

| System clock(cycle) | 16 bit image signal 121 | 16 bit data bus 92 | Multiplier and accumulator unit-1 | |
|---|---|---|---|---|
| | | | Output from coefficient RAM | Result of multiplier |
| 1 | u(0) | | | |
| 2 | u(1) | | | |
| 3 | u(2) | u(0)' | c(0,0) | |
| 4 | u(3) | u(1)' | c(1,0) | |
| 5 | u(4) | u(2)' | c(2,0) | u(0)'xc(0,0) |
| 6 | u(5) | u(3)' | c(3,0) | u(1)'xc(1,0) |
| 7 | u(6) | u(4)' | c(4,0) | u(2)'xc(2,0) |
| 8 | u(7) | u(5)' | c(5,0) | u(3)'xc(3,0) |
| 9 | u(8) | u(6)' | c(6,0) | u(4)'xc(4,0) |
| 10 | u(9) | u(7)' | c(7,0) | u(5)'xc(5,0) |
| 11 | u(10) | u(8)' | c(8,0) | u(6)'xc(6,0) |
| 12 | u(11) | u(9)' | c(9,0) | u(7)'xc(7,0) |
| 13 | u(12) | u(10)' | c(10,0) | u(8)'xc(8,0) |
| 14 | u(13) | u(11)' | c(11,0) | u(9)'xc(9,0) |
| 15 | u(14) | u(12)' | c(12,0) | u(10)'xc(10,0) |
| 16 | u(15) | u(13)' | c(13,0) | u(11)'xc(11,0) |
| 17 | u(16) | u(14)' | c(14,0) | u(12)'xc(12,0) |
| 18 | u(17) | u(15)' | c(15,0) | u(13)'xc(13,0) |
| 19 | u(18) | u(16)' | c(0,0) | u(14)'xc(14,0) |
| 20 | u(19) | u(17)' | c(1,0) | u(15)'xc(15,0) |
| 21 | u(20) | u(18)' | c(2,0) | u(16)'xc(0,0) |
| 22 | u(21) | u(19)' | c(3,0) | u(17)'xc(1,0) |
| 23 | u(22) | u(20)' | c(4,0) | u(18)'xc(2,0) |
| 24 | u(23) | u(21)' | c(5,0) | u(19)'xc(3,0) |

| | | | | |
|---|---|---|---|---|
| 25 | u(24) | u(22)' | c(6,0) | u(20)'xc(4,0) |
| 26 | u(25) | u(23)' | c(7,0) | u(21)'xc(5,0) |
| 27 | u(26) | u(24)' | c(8,0) | u(22)'xc(6,0) |
| 28 | u(27) | u(25)' | c(9,0) | u(23)'xc(7,0) |
| 29 | u(28) | u(26)' | c(10,0) | u(24)'xc(8,0) |
| 30 | u(29) | u(27)' | c(11,0) | u(25)'xc(9,0) |
| 31 | u(30) | u(28)' | c(12,0) | u(26)'xc(10,0) |
| 32 | u(31) | u(29)' | c(13,0) | u(27)'xc(11,0) |
| 33 | u(32) | u(30)' | c(14,0) | u(28)'xc(12,0) |
| 34 | u(33) | u(31)' | c(15,0) | u(29)'xc(13,0) |
| 35 | u(34) | u(32)' | c(0,0) | u(30)'xc(14,0) |
| 36 | u(35) | u(33)' | c(1,0) | u(31)'xc(15,0) |
| 37 | u(36) | u(34)' | c(2,0) | u(32)'xc(0,0) |
| 38 | u(37) | u(35)' | c(3,0) | u(33)'xc(1,0) |
| 39 | u(38) | u(36)' | c(4,0) | u(34)'xc(2,0) |
| 40 | u(39) | u(37)' | c(5,0) | u(35)'xc(3,0) |

Table 2-2

| System clock( cycle) | Multiplier-accumulator unit-1 | | | | Output of image signal proces- sor 125 |
|---|---|---|---|---|---|
| | Out- put of se- lec- tor | Out- put of adder | Tri-state driver | | |
| | | | Input | Output | |
| 1 | | | | High impedance | |
| 2 | | | | High impedance | |
| 3 | | | | High impedance | |
| 4 | | | | High impedance | |
| 5 | | | | High impedance | |
| 6 | "0" | (0) | | High impedance | |
| 7 | (0) | (1) | | High impedance | |

| 8 | (1) | (2) | | High impedance | |
|---|---|---|---|---|---|
| 9 | (2) | (3) | | High impedance | |
| 10 | (3) | (4) | | High impedance | |
| 11 | (4) | (5) | | High impedance | |
| 12 | (5) | (6) | | High impedance | |
| 13 | (6) | (7) | | High impedance | |
| 14 | (7) | (8) | | High impedance | |
| 15 | (8) | (9) | | High impedance | |
| 16 | (9) | (10) | | High impedance | |
| 17 | (10) | (11) | | High impedance | |
| 18 | (11) | (12) | | High impedance | |
| 19 | (12) | (13) | | High impedance | |
| 20 | (13) | (14) | | High impedance | |
| 21 | (14) | (15) | | High impedance | |
| 22 | "0" | (0) | v(0) | v(0) | v(0),1 |
| 23 | (0) | (1) | v(0) | High impedance | v(1),2 |
| 24 | (1) | (2) | v(0) | High impedance | v(2),3 |
| 25 | (2) | (3) | v(0) | High impedance | v(3),4 |
| 26 | (3) | (4) | v(0) | High impedance | v(4),5 |
| 27 | (4) | (5) | v(0) | High impedance | v(5),6 |
| 28 | (5) | (6) | v(0) | High impedance | v(6),7 |
| 29 | (6) | (7) | v(0) | High impedance | v(7),8 |
| 30 | (7) | (8) | v(0) | High impedance | v(8),9 |
| 31 | (8) | (9) | v(0) - | High impedance | v(9),10 |
| 32 | (9) | (10) | v(0) | High impedance | v(10),11 |
| 33 | (10) | (11) | v(0) | High impedance | v(11),12 |
| 34 | (11) | (12) | v(0) | High impedance | v(12),13 |
| 35 | (12) | (13) | v(0) | High impedance | v(13),14 |
| 36 | (13) | (14) | v(0) | High impedance | v(14),15 |

| 37 | (14) | (15) | v(0) | High impedance | v(15),16 |
|---|---|---|---|---|---|
| 38 | "0" | (0) | v(16) | High impedance | v(16),1 |
| 39 | (0) | (1) | v(16) | High impedance | v(17),2 |
| 40 | (1) | (2) | v(16) | High impedance | v(18),3 |

N.B. (n) in items "Output of selector" and "Output of adder" expresses the range of summation from i=0 to n.

n in item "v(t),n" indicates an output from the n-th multiplier and adder unit.

The input signal through the 16 bit width data buses 99 and 102 is multiplied with the first coefficient of each sub set read by the signal from the RAM read control circuit 8 in the multiplier 9 within each multiplier and accumulator unit. The result of the multiplication is input the accumulator 12 at the next cycle to be added to the "0" signal 16 from the 3 inputs 1 output selector 13 (first accumulation). During this time, a next input signal is being multiplied with the second coefficient of the sub set in the multiplier 9. At the next cycle, the result of the second multiplication in the multiplier 9 is added to the result of the first accumulation in the adder 12 (second accumulation) while a next input signal and the third coefficient of the sub set are being multiplied in the multiplier 9. The same accumulation is repeated another 14 times, so that the multiplication to 16 input signals of the sub set is completed. As a result, the RAM read control circuit 8 is reset and the coefficients of each sub set are started to be read out from the first one at the next cycle. Simultaneously, the result of the 16 accumulations is taken into the 36 bit width register 18 and output to the clipping, rounding and adder unit 114 sequentially from one multiplier and accumulator unit for every cycle as the next 16 accumulations are in progress. "0" signal 16 is selected among the outputs from the 3 inputs 1 output selector 13 for initialization purpose at the cycle after the RAM read control circuit 8 is reset. Accordingly, another accumulation is started. The operation in resetting, taking of the signal and outputting for every 16 cycles is controlled by the timing control signal 4. The signal sent to the clipping, rounding and adder unit 114 is subjected to the clipping processing to a reference value inside the unit 114 and then rounded to a 16 bit width signal. The data output from the clipping, rounding and adder unit 114 is written into a dual-port memory 128 of Fig. 18. In order to write the data, the address signal generated in a dual-port memory write/read controller 129 is counted from the address 0 to the address 255 in the manner as indicated in Fig. 14 for every cycle, so that 255 data is written. The timing when counting is started is made synchronous with the timing whereby the first data of the sub set is output from the image signal processor 125 by a start signal 130. After the 255 data is completely written, reading from the dual-port memory 128 is started. In other words, the address signal generated in the dual-port memory write/read controller 129 is given to the address 0, address 16, address 32, ..., address 240, address 1, address 17, address 33, ......, address 15, ..., address 239, address 255 sequentially in this order as illustrated in Fig. 14. The data read for every one cycle in this order is input to an image signal processor 131. It is to be noted here that 16 values of sub sets constituted by each column of the transposed matrix of the matrix of transformation coefficients of 16 × 16 DCT processing are input beforehand in the coefficient RAM of each multiplier and accumulator unit of the image signal processor 131. Although the image signal processor 131 has the same structure as the image signal processor 126 shown in Fig. 18, the signal input of the image signal processor 131 is already processed through accumulation and rounding processing to a 16 bit width signal, and therefore the signal is input as it is, via the variable length delay 98 set at "0", simultaneously to the multiplier and accumulator units of the groups 100 and 103 without being processed in the subtraction and clipping unit 97. The multiplication and accumulation in the image signal processor 131 goes in the same manner as in the image signal processor 126, the description of which is therefore abbreviated. The signal after being time-divided and rounded to a 16 bit width signal in the unit 114 is outputted as an output signal 134 subjected to DCT processing. In the case where the instant image signal processor is used for real time 16 × 16 DCT processing to image signals, to write the result of the operation of the next image signal is started simultaneously when reading from the dual-port memory 128 is started. In this case, writing is carried out from the address 256 to address 511 of the dual-port memory 127. Reading is done from the address 256, address 272, ..., address 496, address 257, address 273, ..., address 497, ...., address 495 to the address 511 (the address assignment in Fig. 14 is moved in parallel by 256 addresses). Writing from the address 0 and writing from the address 256 are carried out alternately, whereby real time 16x6 DCT processing is achieved.

Hereinbelow is discussed the structure and operation when an image signal processor of the present invention is used for FIR digital filtering treatment as a third example.

The N-degree FIR digital filtering treatment is generally expressed by the formula (12) described earlier when a time series input signal is designated by X(n) and a time series output signal is denoted by Y(n).

$$Y(n) = a_0 X(n) + a_i X(n-1) + a_2 X(n-2) \ ... \ + a_{N-1} X(n-N) \qquad (12)$$

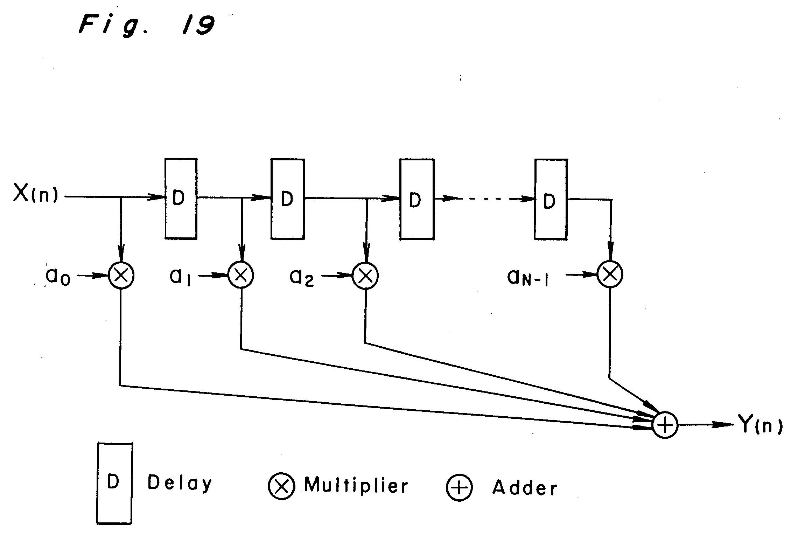

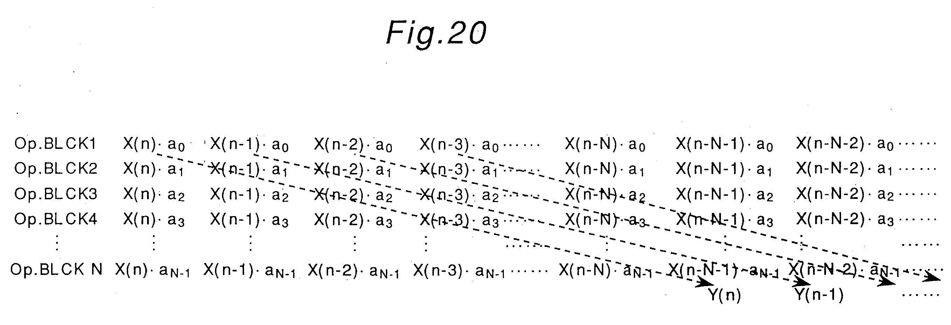

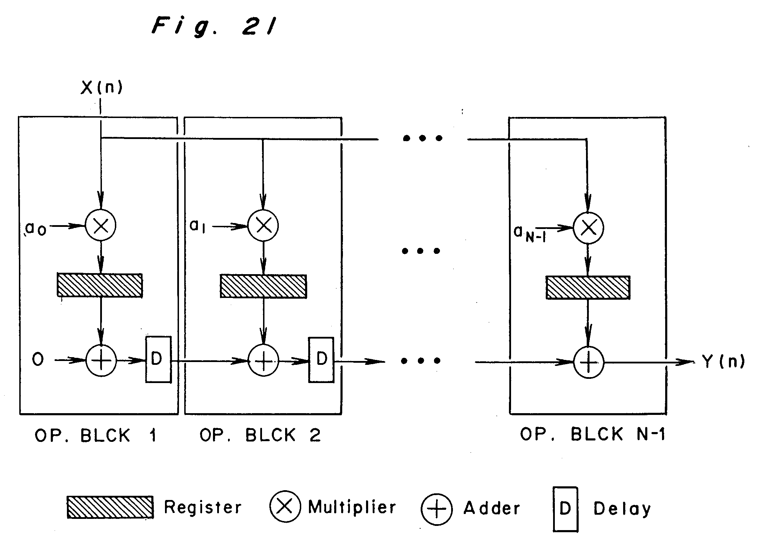

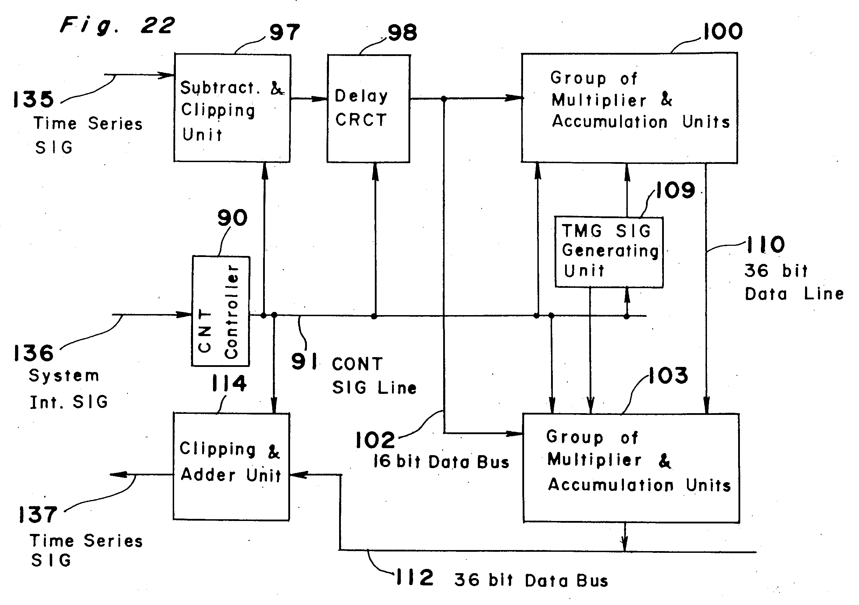

In the formula (12), $a_i(0 \leq i \leq N-1)$ is a coefficient of the filter which is constant independent of the value of the signal, and $X(n-j)(1 \leq j \leq N)$ is an input signal j times earlier than the current input signal X(n). An operation to obtain Y(n) in the formula (12) is constituted as shown in Fig. 19. Since it is actually difficult to carry out the addition of many input signals simultaneously as in Fig. 19, the multiplication and accumulation is made in the arrangement of a pipe line in the present image signal processor thereby to realize the filtering processing. Fig. 20 is a diagram showing the principle when the filtering processing is realized in the pipe line arrangement. The time series input signal X(n) is multiplied with each of the filter coefficients $a_0$-$a_{N-1}$ simultaneously at each of N processing blocks in the case of the pipe line arrangement. In Fig. 20, the result of the multiplication of the input signal is indicated for every processing block. The formula (12) is accomplished by performing additions in a direction of an arrow in the drawing. Fig. 21 shows the constitution of the pipe line arrangement. A circuit indicated by oblique lines is a register to realize the pipe line operation. The input time series signals X(n) are simultaneously input to each of the operational blocks for every cycle and multiplied with respective filter coefficients $a_0$-$a_{N-1}$. The multiplication of the time series signal X(n) and filter coefficient $a_{N-1}$ is output from the operational block N with a delay of one cycle. In other words, simultaneously when the $X(N+1).a_{N-1}$ is input to the adder within the block, $X(N-1).a_{N-1}$ is output from the delay. The signal is input to the operational block N-1 and added with $X(n).a_{N-2}$. The result of the addition is output with one cycle delay and added in the operational block N-2. The result of the addition at this time is $X(n-2).a_{N-1} + X(n-1).a_{N-2} + X(n).a_{N-3}$ and input to the operation block N-3 with one cycle delay. In the manner similar to the above, the result of the multiplication in each operational block to the operational block 1 is added, so that the time series signal Y(n) as a result of the N-degree filtering processing is output. The operational block is constituted by one multiplier and accumulator unit of the image signal processor, and therefore FIR digital filtering processing up to 15 degrees can be realized by one image signal processor. The construction of the image signal processor when the FIR digital filtering processing up to 15 degrees is carried out is indicated in Fig. 22. Since almost all the circuits in Fig. 22 are identical to those in Figs. 1 to 3, the circuits are designated by the same reference numerals and description thereof will be abbreviated here. The construction in Fig. 22 is obtained by designating signals for selecting the kind of the image processing in the system interface signals 89 by a combination of filtering processing. The operation will now be depicted with reference to Fig. 22 and Figs. 1 through 3. In Fig. 22, a time series input signal 135 is input to the subtraction and clipping unit 97. Subtraction is not performed in the unit 97 in the case of the filtering processing.

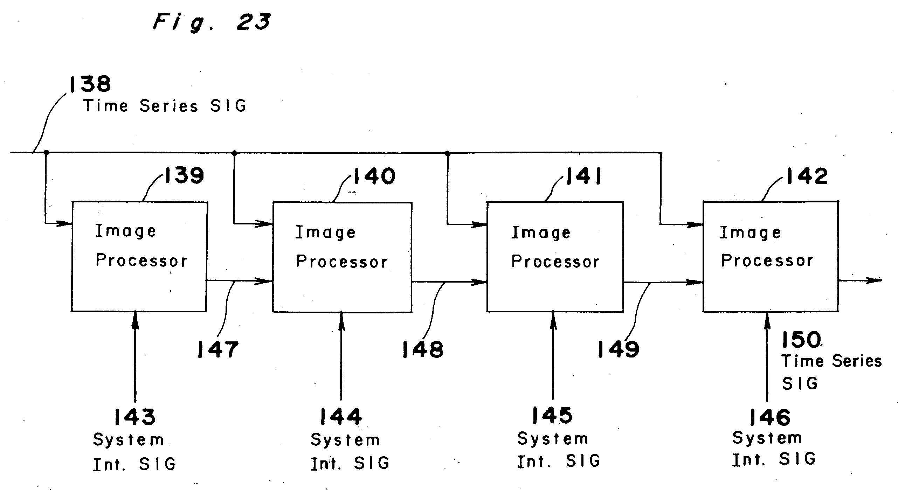

The signal subjected to clipping processing is input, via the variable length delay circuit 98 with zero delay amount in the case of a filter of 15 degree or less wherein only one image processor is used, simultaneously to 16 multiplier and accumulator units within the groups 100 and 103. The two groups 100 and 103 of the multiplier and accumulator units are connected in 16 stages in a longitudinal direction by the 36 bit width signal lines 41-47 and the 36 bit width signal 56 to transmit the result of the addition in the adjacent multiplier and accumulator unit. When the instant image signal processor is to be driven as an N-taps filter $(0 \leq N \leq 15)$, the output of the multiplier and accumulator unit at the (N+1)th stage should be taken out. The signal is input to the clipping, rounding and adder unit 114 through the 36 bit width bus 104 and 36 bit width data bus 112. The signal is allowed to go through the unit 114 and output as a time series output signal 137. In Fig. 23, there is illustrated the construction when four image signal processors of the present invention are used to constitute a 63-taps FIR filter. A 16 bit width time series input signal 138 is input simultaneously to image signal processors 139-142 for every cycle to 16 multiplier and accumulator units of the processors 139-142. It is to be noted here that a coefficient of the filter should be written in the coefficient RAM within each unit before the processing is started.

On the other hand, in a case wherein a filter is constituted by connecting the image processors in multi-stages, it is in general necessary to delay input time series signals by the adjacent processor in accordance with delay of output time series signals from one processor caused thereby. However, according to the

EP 0 474 246 A2

present invention, a variable length delay circuit 98 is provided in each image processor for setting a suitable delay and, accordingly, plural image processors are easily connected in multi-stages without providing external delay circuits.

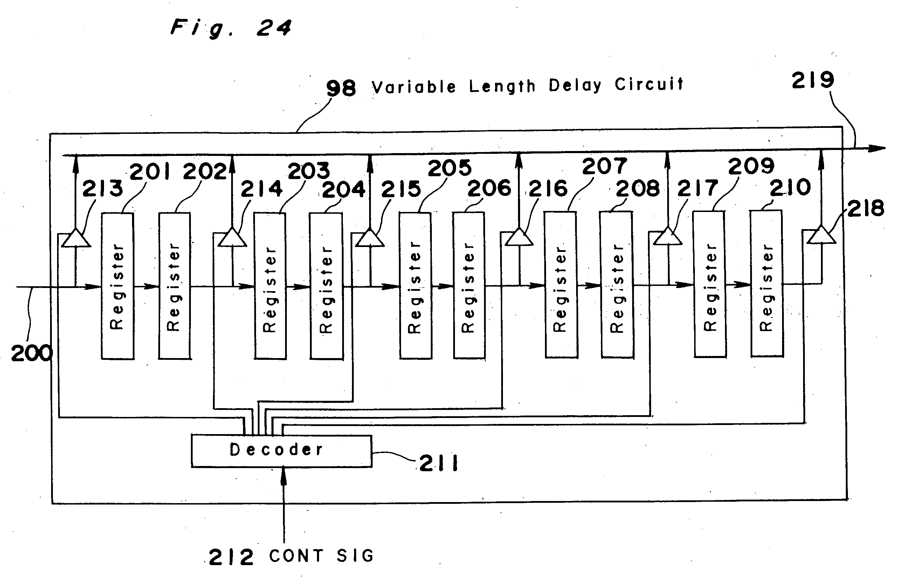

Fig. 24 shows a composition of the variable length delay circuit 98.

An input signal is sent to registers 201 to 210 for every cycle. A control signal decoder 211 decodes a control signal 212 therefor which is a portion of the function block control signal 171 and the decoded signal is sent to tri-state drivers 213 to 218. Each tri-state driver receives the signal from the decoder 211 and outputs an output signal 219 when the received signal is turned "High". Namely, the first tri-state driver 213 outputs the output signal with zero delay amount, the second one 214 outputs the same with the delay amount of 2 cycles and the last one delays the same by the amount of 10 cycles. Since the delay amount by each tri-state driver is two cycles, in the case wherein four image processors are connected in series as shown in Fig. 23, the delay amounts at respective image processors 139 to 142 are set zero, two cycles, four cycles and six cycles, respectively.

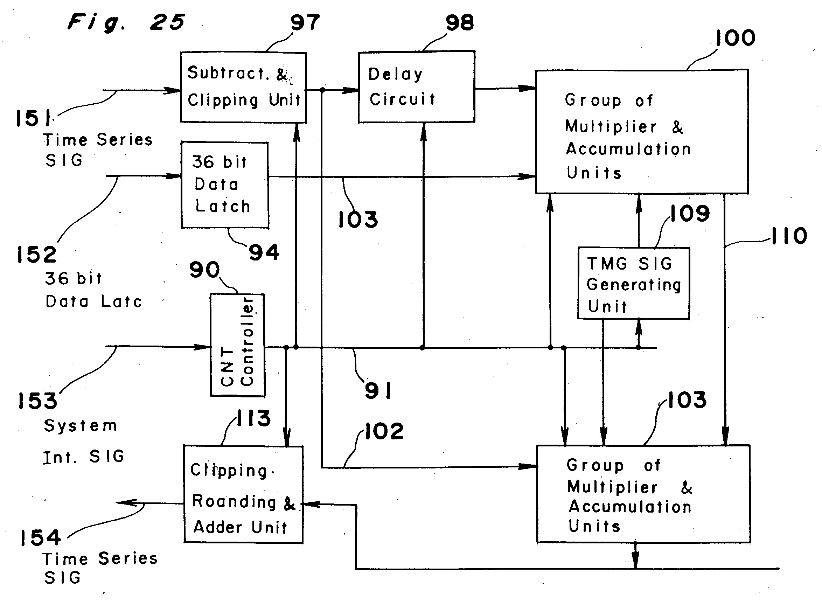

The image signal processor 139 is of the same construction as shown in Fig. 22, wherein the 36 bit width signal output from the final 16th multiplier and accumulator unit is output as a 36 bit width signal 147 to the image signal processor 140. The image signal processors 140-142 are in the structure indicated in Fig. 25, in which nearly the whole circuits are identical to those in Fig. 22. Although the operation in this case is hardly different from the explanation made with reference to Fig. 22, a 36 bit width signal 152 is input and added in the first multiplier and accumulator unit through the 36 bit width signal line 104 in order to connect the multiplier and accumulator units in 16 stages or more. The 36 bit width signal 148 output from the image signal processor 140 is input to the succeeding image signal processor 141. The same processing as in the image signal processor 140 is conducted in the image signal processor 141, thereby sending a 36 bit width signal to the image signal processor 142. The image signal processor 142 carries out the completely same processing as the image signal processor 140. In consequence, a time series output signal 149 is, after being processed through 64 multiplier and accumulator units in total of the four image signal processors, output from the image signal processor 141. If the number of stages of the multiplier and accumulator units connected in the image signal processor 141 is changed among 1-16, it is possible to constitute a filter from 48 to 63 degrees.

As mentioned hereinabove, a filter of $16 \times M-1$ degrees can be easily formed by connecting M image signal processors of the present invention.

As a fourth embodiment, an image signal processor of the present invention is used for the tertiary affine transform, the operation and construction of which will be explained hereinbelow. The affine transform is a considerably important application in the field of computer graphics. The tertiary affine transform is to make the spatial transformation of coordinates to a point in the space. The basic transformation includes expansion, inverse, shear, rotation and parallel displacement of a solid three-dimensional image. The tertiary affine transform is represented by a formula (24) wherein A is a matrix of affine transform, (x,y,z) is coordinates before the transformation and (x',y',z') is coordinates after the transformation;

(if the condition is not satisfied, the figure in a three dimension is converted to a figure in a two dimension or lower.)

$$\begin{bmatrix} X' \\ Y' \\ Z' \\ 1 \end{bmatrix} = A \cdot \begin{bmatrix} X \\ Y \\ Z \\ 1 \end{bmatrix}$$

$$A: \begin{bmatrix} a & b & c & t_x \\ d & e & f & t_y \\ g & h & i & t_z \\ 0 & 0 & 0 & 1 \end{bmatrix} \qquad \begin{vmatrix} a & b & c \\ d & e & f \\ g & h & i \end{vmatrix} \neq 0$$

The matrix A of affine transform is expressed by the following formulae (25)-(29) when the basic transformation is conducted;

24

Expansion:

$$A = \begin{bmatrix} a & 0 & 0 & 0 \\ 0 & e & 0 & 0 \\ 0 & 0 & i & 0 \\ 0 & 0 & 0 & 1 \end{bmatrix}$$
to multiply by a in a direction of the x axis
to multiply by e in a direction of the y axis
to multiply by i in a direction of the z axis
$0 < a, e, i$

(25)

Inverse:

$$A = \begin{bmatrix} 1 & 0 & 0 & 0 \\ 0 & -1 & 0 & 0 \\ 0 & 0 & -1 & 0 \\ 0 & 0 & 0 & 1 \end{bmatrix} \qquad A = \begin{bmatrix} -1 & 0 & 0 & 0 \\ 0 & 1 & 0 & 0 \\ 0 & 0 & -1 & 0 \\ 0 & 0 & 0 & 1 \end{bmatrix}$$

(to the x axis)           (to the y axis)

$$A = \begin{bmatrix} -1 & 0 & 0 & 0 \\ 0 & -1 & 0 & 0 \\ 0 & 0 & 1 & 0 \\ 0 & 0 & 0 & 1 \end{bmatrix}$$

(26)

(to the z axis)

Shear:

$$A = \begin{bmatrix} 1 & b & c & 0 \\ d & i & f & 0 \\ g & h & 1 & 0 \\ 0 & 0 & 0 & 1 \end{bmatrix}$$

(27)

Rotation:

$$A = \begin{bmatrix} 1 & 0 & 0 & 0 \\ 0 & \cos\theta & -\sin\theta & 0 \\ 0 & \sin\theta & \cos\theta & 0 \\ 0 & 0 & 0 & 1 \end{bmatrix}$$

$\theta$: rotary angle (rotation around the x axis)

$$A = \begin{bmatrix} \cos\theta & 0 & \sin\theta & 0 \\ 0 & 1 & 0 & 0 \\ -\sin\theta & 0 & \cos\theta & 0 \\ 0 & 0 & 0 & 1 \end{bmatrix}$$

$\theta$: rotary angle (rotation around the y axis)

$$A = \begin{bmatrix} \cos\theta & -\sin\theta & 0 & 0 \\ \sin\theta & \cos\theta & 0 & 0 \\ 0 & 0 & 1 & 0 \\ 0 & 0 & 0 & 1 \end{bmatrix}$$

$\theta$: rotary angle (rotation around the z axis)

(28)

**Parallel displacement:**

$$A = \begin{bmatrix} 1 & 0 & 0 & t_x \\ 0 & 1 & 0 & t_y \\ 0 & 0 & 1 & t_z \\ 0 & 0 & 0 & 1 \end{bmatrix}$$ ($t_x$, $t_y$, $t_z$ are the quantity of the parallel displacement in the direction of each axis.)

(29)

When the formula (24) is developed, formulae (30)-(32) are held;

$$x' = ax + by + cz + t_x \quad (30)$$

$$y' = dx + ey + fz + t_y \quad (31)$$

$$z' = gx + hy + iz + t_z \qquad (32)$$

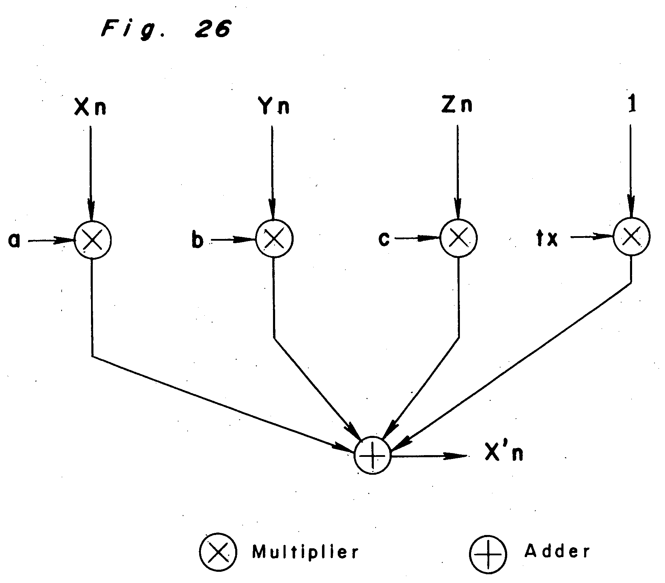

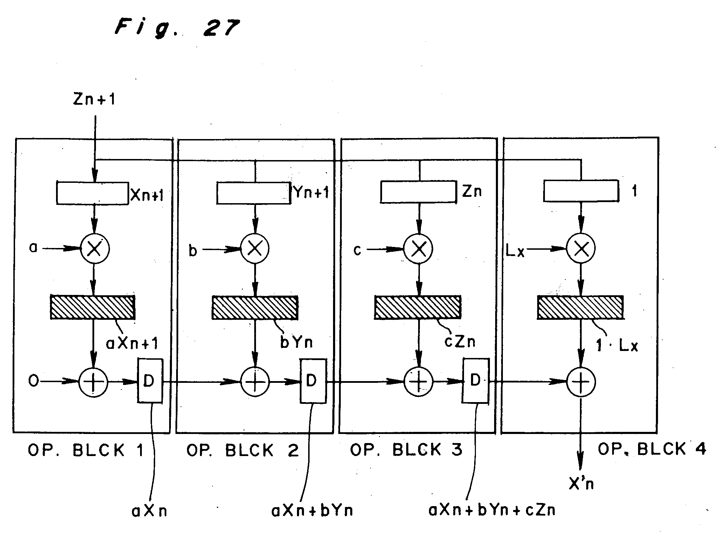

The three formulae represent the form of the summation the construction of which is indicated in Fig. 26. Although Fig. 26 shows only the case when x' is calculated, the construction of the summation is equal also in the case where y' and z' are calculated. It is impossible to add four addends at one time in the actual circuit, and therefore, when the operation is processed in a pipe line, the construction will be as shown in Fig. 27. The value of the coordinates of N points converted in the space, namely, $(X_n, Y_n, Z_n)$ $(0 \leq n \leq N-1)$ is changed to a time series signal in the order from $X_0$, $Y_0$, $Z_0$, 1, $X_1$, $Y_1$, $Z_1$, 1 ..., $X_{N-1}$, $Y_{N-1}$, $Z_{N-1}$ and 1. Only $X_n$ is taken into the processing block 1 and only $Y_n$ is taken into the processing block 2, that is, the input signal is divided into four processing blocks. In other words, signals are input to one processing block for every four cycles of the system clock, the value of which is held until a next signal is input. An output $aX_n$ from the processing block 1 is added with $bY_n$ in the processing block 2, and the result is input to processing block 3. In the processing block 3, the output signal of the processing block 2 is added with $cZ_n$ and the result is output to the processing block 4. The output signal from the processing block 3 is further added with $t_x$ in the processing block 4, thereby obtaining the final output $X'_n$.The timing of the signals at this time is shown in Table 3.

27

Table 3-1

| System clock(cycle) | Input signal | Operational block 1 | | | Operational block 2 | | |
|---|---|---|---|---|---|---|---|
| | | Multiplier | Result of multiplication | Output of adder | Multiplier | Result of multiplication | Output of adder |
| 1 | $X_0$ | $X_0$ | | | | | |
| 2 | $Y_0$ | $X_0$ | $a \times X_0$ | | $Y_0$ | | |
| 3 | $Z_0$ | $X_0$ | $a \times X_0$ | $a \times X_0$ | $Y_0$ | $b \times Y_0$ | |
| 4 | 1 | $X_0$ | $a \times X_0$ | $a \times X_0$ | $Y_0$ | $b \times Y_0$ | $b \times Y_0 + a \times X_0$ |
| 5 | $X_1$ | $X_1$ | $a \times X_0$ | $a \times X_0$ | $Y_0$ | $b \times Y_0$ | $b \times Y_0 + a \times X_0$ |
| 6 | $Y_1$ | $X_1$ | $a \times X_1$ | $a \times X_0$ | $Y_1$ | $b \times Y_0$ | $b \times Y_0 + a \times X_0$ |
| 7 | $Z_1$ | $X_1$ | $a \times X_1$ | $a \times X_1$ | $Y_1$ | $b \times Y_1$ | $b \times Y_0 + a \times X_0$ |
| 8 | 1 | $X_1$ | $a \times X_1$ | $a \times X_1$ | $Y_1$ | $b \times Y_1$ | $b \times Y_1 + a \times X_1$ |
| 9 | $X_2$ | $X_2$ | $a \times X_1$ | $a \times X_1$ | $Y_1$ | $b \times Y_1$ | $b \times Y_1 + a \times X_1$ |
| 10 | $Y_2$ | $X_2$ | $a \times X_2$ | $a \times X_1$ | $Y_2$ | $b \times Y_1$ | $b \times Y_1 + a \times X_1$ |
| 11 | $Z_2$ | $X_2$ | $a \times X_2$ | $a \times X_2$ | $Y_2$ | $b \times Y_2$ | $b \times Y_1 + a \times X_1$ |
| 12 | 1 | $X_2$ | $a \times X_2$ | $a \times X_2$ | $Y_2$ | $b \times Y_2$ | $b \times Y_2 + a \times X_2$ |
| 13 | $X_3$ | $X_3$ | $a \times X_2$ | $a \times X_2$ | $Y_2$ | $b \times Y_2$ | $b \times Y_2 + a \times X_2$ |
| 14 | $Y_3$ | $X_3$ | $a \times X_3$ | $a \times X_2$ | $Y_3$ | $b \times Y_2$ | $b \times Y_2 + a \times X_2$ |
| 15 | $Z_3$ | $X_3$ | $a \times X_3$ | $a \times X_3$ | $Y_3$ | $b \times^{Y_3}$ | $b \times Y_2 + a \times X_2$ |
| 16 | 1 | $X_3$ | $a \times X_3$ | $a \times X_3$ | $Y_3$ | $b \times Y_3$ | $b \times Y_3 + a \times X_3$ |
| 17 | $X_4$ | $X_4$ | $a \times X_3$ | $a \times X_3$ | $Y_3$ | $b \times Y_3$ | $b \times Y_3 + a \times X_3$ |
| 18 | $Y_4$ | $Y_4$ | $a \times X_4$ | $a \times X_3$ | $Y_4$ | $b \times Y_3$ | $b \times^{Y_3} + a \times X_3$ |
| 19 | $Z_4$ | $X_4$ | $a \times X_4$ | $a \times X_4$ | $Y_4$ | $b \times Y_4$ | $b \times Y_3 + a \times X_3$ |
| 20 | 1 | $X_4$ | $a \times X_4$ | $a \times X_4$ | $Y_4$ | $b \times Y_4$ | $b \times Y_4 + a \times X_4$ |

28

Table 3-2

| System clock (cycle) | Operational block 3 | | | Operational block 4 | | Output of operation | Output of apparatus |
|---|---|---|---|---|---|---|---|
| | Multiplier | Result of multiplication | Output of adder | Result of multiplication | Output of adder | | |
| 1 | | | | | | | |
| 2 | | | | | | | |
| 3 | $Z_0$ | | | | | | |
| 4 | $Z_0$ | $c \times Z_0$ | | | | | |
| 5 | $Z_0$ | $c \times Z_0$ | $c \times Z_0 + b \times Y_0 + a \times X_0$ | $t_x$ | $t_x + c \times Z_0 + b \times Y_0 + a \times X_0$ | $X'_0$ | $X'_0$ |
| 6 | $Z_0$ | $c \times Z_0$ | $c \times Z_0 + b \times Y_0 + a \times X_0$ | $t_x$ | $t_x + c \times Z_0 + b \times Y_0 + a \times X_0$ | $X'_0$ | $Y'_0$ |
| 7 | $Z_1$ | $c \times Z_0$ | $c \times Z_0 + b \times Y_0 + a \times X_0$ | $t_x$ | $t_x + c \times Z_0 + b \times Y_0 + a \times X_0$ | $X'_0$ | $Z'_0$ |
| 8 | $Z_1$ | $c \times Z_1$ | $c \times Z_0 + b \times Y_0 + a \times X_0$ | $t_x$ | $t_x + c \times Z_0 + b \times Y_0 + a \times X_0$ | $X'_0$ | |
| 9 | $Z_1$ | $c \times Z_1$ | $c \times Z_1 + b \times Y_1 + a \times X_1$ | $t_x$ | $t_x + c \times Z_1 + b \times Y_1 + a \times X_1$ | $X'_1$ | $X'_1$ |

29

| 10 | $Z_1$ | $cxZ_1$ | $cxZ_1+bxY_1+axX_1$ | $t_x$ | $t_x+cxZ_1+bxY_1+axX_1$ | $X'_1$ | $Y'_1$ |
|---|---|---|---|---|---|---|---|
| 11 | $Z_2$ | $cxZ_1$ | $cxZ_1+bxY_1+axX_1$ | $t_x$ | $t_x+cxZ_1+bxY_1+axX_1$ | $X'_1$ | $Z'_1$ |
| 12 | $Z_2$ | $cxZ_2$ | $cxZ_1+bxY_1+axX_1$ | $t_x$ | $t_x+cxZ_1+bxY_1+axX_1$ | $X'_1$ | |
| 13 | $Z_2$ | $cxZ_2$ | $cxZ_2+bxY_2+axX_2$ | $t_x$ | $t_x+cxZ_2+bxY_2+axX_2$ | $X'_2$ | $X'_2$ |
| 14 | $Z_2$ | $cxZ_2$ | $cxZ_2+bxY_2+axX_2$ | $t_x$ | $t_x+cxZ_2+bxY_2+axX_2$ | $X'_2$ | $Y'_2$ |
| 15 | $Z_3$ | $cxZ_2$ | $cxZ_2+bxY_2+axX_2$ | $t_x$ | $t_x+cxZ_2+bxY_2+axX_2$ | $X'_2$ | $Z'_2$ |
| 16 | $Z_3$ | $cxZ_3$ | $cxZ_2+bxY_2+axX_2$ | $t_x$ | $t_x+cxZ_2+bxY_2+axX_2$ | $X'_2$ | |
| 17 | $Z_3$ | $cxZ_3$ | $cxZ_3+bxY_3+axX_3$ | $t_x$ | $t_x+cxZ_3+bxY_3+axX_3$ | $X'_3$ | $X'_3$ |
| 18 | $Z_3$ | $cxZ_3$ | $cxZ_3+bxY_3+axX_3$ | $t_x$ | $t_x+cxZ_3+bxY_3+axX_3$ | $X'_3$ | $Y'_3$ |
| 19 | $Z_4$ | $cxZ_3$ | $cxZ_3+bxY_3+axX_3$ | $t_x$ | $t_x+cxZ_3+bxY_3+axX_3$ | $X'_3$ | $Z'_3$ |
| 20 | $Z_4$ | $cxZ_4$ | $cxZ_3+bxY_3+axX_3$ | $t_x$ | $t_x+cxZ_3+bxY_3+axX_3$ | $X'_3$ | |

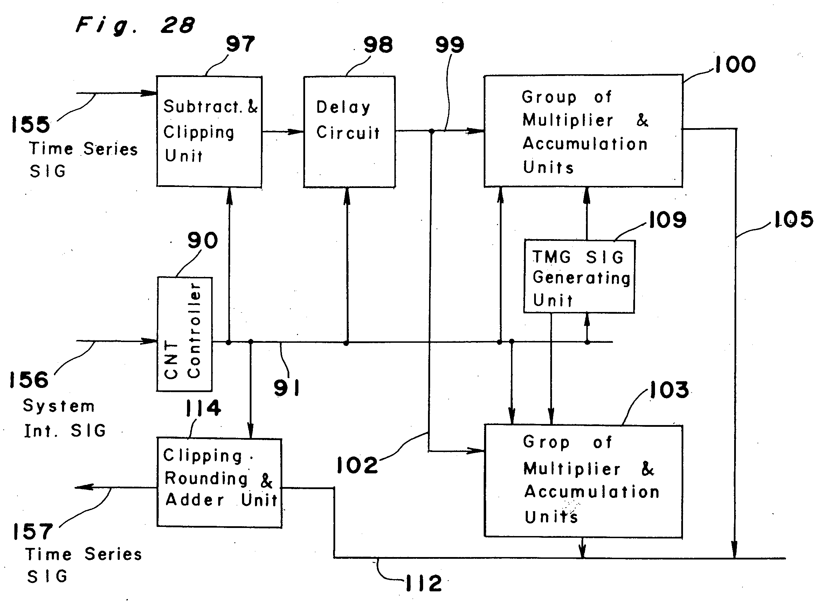

Fig. 28 shows the construction of an image signal processor of the present invention when the affine transform is executed. Since the circuit construction of the image signal processor is the same as that of Fig. 25 except that the groups 100 and 103 of the multiplier and accumulator units are not connected with each other by the 36 bit width signal line 110, the same parts are designated by the same reference numerals and the detailed description will be abbreviated here. The construction is achieved by designating signals to select the kind of the image processing from the system interface signals 3 by the combination of the affine transformations. The operation of the image signal processor in the affine transform will be described with reference to Figs. 28 and 1 to 3. In Fig. 28, a 16 bit width time series input signal 155 which carries the value of coordinates (including 1) aligned in time sequence as mentioned before is, passing through the subtraction and clipping unit 97 and the variable length delay circuit 98 with zero delay amount, input to the groups 100 and 103. The groups 100 and 103 of multiplier and accumulator units constitute three processing units having the multiplier and accumulator units connected in longitudinal four stages by the 36 bit width signal lines 41-47 to transmit the result of the addition in the adjacent multiplier and accumulator unit shown in Fig. 2. Before starting the treatment, however, 12 transformation coefficients a-i, $t_x$-$t_z$ necessary for affine transform are written in the coefficient RAMs of 12 multiplier and accumulator units. Values of coordinates $X'_n$, $Y'_n$, $Z'_n$ after the affine transform are operated in each processing unit. The operation when $X'_n$ is computed will be explained with reference to Figs. 1 and 2. $X_n$ ($0 \leq n \leq N-1$) among the input signals is input to the multiplier and accumulator unit 23, where the signal is multiplied with a transformation coefficient a written in the coefficient RAM 7. The result is added with the "0" signal 16 for initialization purpose in the adder 12 and the result $aX_n$ is, through the 36 bit width signal line 41, input to the multiplier and accumulator unit 24. To the multiplier and accumulator unit 24, $Y_n$ ($0 \leq n \leq N-1$) among the input signals is input with one cycle delay and multiplied with a transformation coefficient b written in the coefficient RAM 7. The multiplication result is added with the signal from the unit 23 in the adder 12. The result $aX_n+bY_n$ is input the multiplier and accumulator unit 25 through the 36 bit width signal line 42. $Z_n$ - ($0 \leq n \leq N-1$) of the input signals is input to the multiplier and accumulator unit 25 with one cycle delay to $X_n$,and multiplied with a transformation coefficient c written in the coefficient RAM 7. The result is added with the signal from the unit 24 in the adder 12, and the multiplied result $aX_n+bY_n+cZ_n$ is input to the multiplier and accumulator unit 26 through the 36 bit width signal line 43. 1 is input to the unit 26 with three cycles' delay to $X_n$ to be multiplied with a transformation coefficient $t_x$ in the coefficient RAM 7. The result is added in the adder 12 with the signal from the unit 25, so that the final result $X'_n$ is output. Although the 36 bit width signal line 44 inputs the result of the operation to the multiplier and accumulator unit 27, the 3 inputs 1 output selector 13 selects the "0" signal 16 for initialization in the unit 27, whereby the multiplier and accumulator units are connected in four stages. $Y'_n$ and $Z'_n$ are operated in the same manner as above.

The results of the operations of $X'_n$, $Y'_n$ and $Z'_n$ are generated in the three units at one time and time-divided and output by controlling the 36 bit width tri-state driver 19 at the output stage (fourth stage in each unit). The signal is input to the clipping, rounding and adder unit 114 through the 36 bit width bus 105 and 36 bit width data bus 112 of Fig. 28. In the case of the affine transform, only the clipping processing is executed to output a time series output signal 157.

As described hereinabove, the image signal processor of the present invention enables the affine transform corresponding to various transformation coefficients.

The following description is related to a fifth embodiment of an image signal processor of the present invention used for hue transform. Although hue can be expressed in various manners such as RGB, YIQ, CMY or XYZ of CIE, these expressions are transformed more frequently (hue transform) in accordance with the progress of the computer graphics. The hue transform is executed by using a 3x3 transformation matrix. An example when a signal expressed by RGB is transformed to a signal of YIQ expression will be described below, but the explanation goes true also for the other kinds of hue transform. If the value of a transformation coefficient is changed, the hue transform in the other ways can be easily achieved.

The transformation from the RGB expression to YIQ expression is represented;

$$\begin{bmatrix} Y \\ I \\ Q \end{bmatrix} = C \cdot \begin{bmatrix} R \\ G \\ B \end{bmatrix}$$
$$C: \begin{bmatrix} 0.299 & 0.587 & 0.144 \\ 0.596 & -0.274 & -0.322 \\ 0.211 & -0.522 & 0.311 \end{bmatrix} \tag{33}$$

The operation and structure of the image signal processor during the above transform will be depicted here. As is apparent from the formula (33), the above hue transform is realized by the circuit structure similar to that for the affine transform (referring to Fig. 28). In this case, however, it is different that the transform matrix is 3x3. The multiplier and accumulator units inside the group 100 of Fig. 28 constitute two processing units, each connected in three stages (the remaining two processing units are not used), and three multiplier and accumulator units inside the group 103 are used to constitute one processing unit in three stages. The constitution is obtained by designating the signals to select the kind of the image processing among system interface signals 156 by a combination of the hue transforms. The signal expressed by RGB of N pixels is arranged in time sequence to be $R_0$, $G_0$, $B_0$, $R_1$, $G_1$, $B_1$, ..., $R_{N-1}$, $G_{N-1}$, $B_{N-1}$ to be input to the three processing units. Necessary nine transformation coefficients for the hue transform should be written in the coefficient RAM of every multiplier and accumulator unit before the hue transform is carried out. Values $Y_n$, $I_n$, $Q_n$ after the hue transform are operated in each processing unit. The operation in computing $Y_n$ will be described with reference to Figs. 1 and 2. $R_n$ ($0 \leq n \leq N-1$) of the input signals is input to the multiplier and accumulator unit 23 and multiplied with a transformation coefficient 0.229 written in the coefficient RAM 7. The result is added in the adder 12 with the "0" signal 16 for initialization, and input to the multiplier and accumulator unit 24 through the 36 bit width signal line 41. $G_n$ ($0 \leq n \leq N-1$) is input to the multiplier and accumulator unit 24 among the input signals with one cycle delay to $R_n$ and multiplied with a transformation coefficient 0.587 in the coefficient RAM 7. The result is added with the signal from the unit 23 in the adder 12 and, input to the multiplier and accumulator unit 25 through the 36 bit width signal line 42. Among the input signals, $B_n$ ($0 \leq n \leq N-1$) is input to the unit 25 with two cycles' delay to $R_n$, and multiplied with a transformation coefficient 0.144 written in the coefficient RAM 7. The result of the multiplication is added to the signal from the unit 24 in the adder 12, so that the final result $Y_n$ is output.

While the 36 bit width signal line 43 inputs the result of the operation to the multiplier and accumulator unit 26, the 3 inputs 1 output selector 13 selects the "0" signal 16 for initialization purpose in the unit 26 and therefore the unit 26 is in the state connected in the longitudinal three stages. $I_n$ and $Q_n$ are similarly computed. The results $Y_n$, $I_n$, $Q_n$ are simultaneously generated in the three units and time-divided to be output by controlling the 36 bit width tri-state driver 19 at the output stage (third stage in each unit). The signal is, through the 36 bit width bus 105 and 36 bit width data bus 112 shown in Fig. 28, input to the clipping, rounding and adder unit 114. Only the clipping treatment is performed for the hue transform. As a

31

result, the time series output signal 157 is output.

In using the image signal processor of the present invention, if the value of a transformation coefficient to be written in the coefficient RAM is changed, the other kinds of hue transform can be easily performed.

According to the present invention, each multiplier and accumulator unit having a single function within the group of the units is connected in the form of a pipe line. Therefore, not only the serial processing is achieved, but the high-speed processing is made possible when the parallel processing is carried out by a plurality of the multiplier and accumulator units. Since any optional coefficient can be set from outside the processor, the combination of the units are changed and data are exchanged between the units in the style of a firm ware. As a result, the degree of freedom for the combination of the multiplication and accumulation is enhanced, whereby the same processor can be used for different kinds of image processing.

Although, the present invention has been fully described by way of example with reference to the accompanying drawings, it is to be noted that various changed and modifications will be apparent to those skilled in the art. Therefore, unless otherwise such chages and modifications depart from the scope of the invention as defied by the appended claims, they should be construed as included therein.

## Claims

1. An image signal processor having a plurality of multiplier and accumulator units built in a large-scale integrated circuit for performing an operation upon receipt of an image signal given as a digitized time series signal and an external input signal,

   said multiplier and accumulator unit being provided with a coefficient RAM the content of which can be set as desired by writing from outside and, having a multiplier for multiplying a coefficient signal output from said coefficient RAM with an input image signal, and an adder which can be switched to perform accumulation of the result of multiplication by a control signal or to perform addition of the result of multiplication to an external input signal and which is connected to said multiplier in the arrangement of a pipe line,

   wherein the combination of multiplications and accumulations in said multiplier and accumulator units and the exchange of data between said multiplier and accumulator units are achieved in the form of a firm ware, thereby executing multiplication and accumulation within said multiplier and accumulator units corresponding to the kind of the image processing selected by a selecting signal given from outside.

2. The image signal processor as claimed in claim 1 which further provided a rounding and clipping means for performing rounding and clipping processings about a signal comprised of upper N bits of an operation output signal of M bit width (M > N) when seen from the lowest bit designated as a rounding position from outside of said processor.

3. The image signal prosessor as claimed in claim 1 wherein said plurality of multiplier and accumulator units are connected in cascade and there is provided a variable length delay circuit through which said digitized time series signal is fed to respective multiplier and after delaying the same by a delay amount corresponding to a delay caused in the operation by the proeceding multiplier and accumulator unit.

*Fig. 1*

16 bit width SIG    DT SIG    ADD SIG

10    6    5

9

16 bit x 16bit

Multiplier

16 word x 16bit

Coefficient

RAM

7

11

32 bit Regist.

RAM Read
Controller

8

12

36 bit
Accumulator

14

36 bit Regist.

13

3 Input
1 Output
Selector

2

Control register

1 Multiplier & Accumulater Unit

15

36 bit SIG

17

36 bit SIG Line

16

"O"

36 bit Regist.

18

20

2 Input
1 Output
Selector

19

36 bit
Tri-state
Driver

21   36 bit
Output DT SIG

3 Mode
control
SIG

4 Timing
SIG

# Fig. 2

# Fig. 3

**95** ADD Regist.

**96** ADD Line

**92** 16 bit Data Bus

**99** 16 bit Data Bus

**93**

**94**

**87**

**88**

**90**

**91**

**104**

**89**

**97**

**98**

**Subtrct. Clipping Unit**

**Delay Circuit**

**Group of M & A units** **100**

**Clipping Rounding & Adder Unit** **106**

**108**

**TMNG SIG Generator**

**105**

**110**

**DP RAM Controller**

**109**

**CNT Controll.**

**113**

**114**

**111**

**103**

**107**

**Dual-port RAM**

**115**

**36 bit SIG. output port**

**Clipping. Rounding Adder Unit**

**101**

**Group of M & A unito**

**112** 36 bit Data Bus

**102** 16 bit Data Bus

EP 0 474 246 A2

## Fig. 4

89 System Interface SIG　　90 Central Control Unit　　91 Control SIG Line

160 Funct Sel SIG

161 Funct. Sel. SIG Decoder

170 Funct BLCK CONT SIG Generat.

171 Funct. BLCK CONT SIG

166 ADD SIG

167 ADD SIG Decoder

168 ADD Design. SIG

169 Controlling Regist. Group

162

163 WR·RD SIG Generating unit

164 WR enable SIG

172 CLK SIG

165 RD enable SIG

188 STR SIG

EP 0 474 246 A2

**Fig. 5**

**91** Control SIG Line

**109** Timing SIG Generating Unit

**86** Control SIG

**171** Funct. BLCK CONT SIG

**189** CNT Controller

**191**

**192**

**190**

**188** STR SIG

Counter

CNT SIG Decoder

**193**

**194**

**195**

**196**

**172** CLK SIG

**197** DP RAM CNTR Drive SIG

**76** Timing CNTR SIG

EP 0 474 246 A2

Fig. 6

114 Clipping · Rounding · Adder Unit

113 36 bit SIG Line

180

187 186

185

183

182 181

Register

Selector

Rounding Unit

Shift Clip Unit

Register

Selector

Adder

112 36 bit Data Bus

184c

184b

184a

171 Funct. BLCK CONT SIG

EP 0 474 246 A2

38

Fig. 7

**183** Shift & Clip Unit

**184b** Rounding POS IND SIG

36(35-0)

**300** Shift Circuit

**302** Selector

17

**303** (0111 1111 1111 1110)

**304** (1000 0000 0000 0000)

**301** Clipping Unit

17

17

17

2

22 (35-14)

22 (35-14)

22 (35-14)

## Fig.8

| Rounding POS IND SIG | | | Rounding Position | Range of Output |
|---|---|---|---|---|
| R2 | R1 | R0 | | |
| 0 | 0 | 0 | 14 bits from LSB | 30-14 |
| 0 | 0 | 1 | 15 bits from LSB | 31-15 |
| 0 | 1 | 0 | 16 bits from LSB | 32-16 |
| 0 | 1 | 1 | 17 bits from LSB | 33-17 |
| 1 | 0 | 0 | 18 bits from LSB | 34-18 |
| 1 | 0 | 1 | 19 bits from LSB | 35-19 |

## Fig.9

```
(R2,R1,R0)=(010)
                 35  32                              16                        0
Register 182     0110 0000 1110 0101 1100 1111 0111 0001 1000

                 32                16
Output of 300    0000 0111 0010 1110 0

                 35  32                        14
Input of 301     0110 0000 1110 0101 1100 1

       Detection range of over flow & under flow
```

## Fig. 10

116 Time Series Signals

118 Multiplier

117
Transformation
Coefficients

119 Adder

120 Delay

121 Output signals

Fig. 11

EP 0 474 246 A2

*Fig.12*

Subset U0   Subset U1

Subset C0   Subset C1   Subset CN-1

$$u(0) \quad u(1) \quad \cdots \cdots \cdot u(N-1)$$

$$u(N) \quad u(N+1) \quad \cdots \cdots \cdot u(2N-1)$$

Subset U 2

Subset U X

Subset U N-1

U

$\times$

$$
\begin{array}{ccc}
c(0,0) & c(0,1) & c(0,N-1) \\
c(1,0) & c(1,1) & c(1,N-1)
\end{array}
$$

$$c(N-1,0) \quad c(N-1,1) \quad c(N-1,N-1)$$

C

$$
=
\begin{bmatrix}
U0 \circ C0 & \cdots & U0 \circ CN\text{-}1 \\
\vdots & & \vdots \\
Ux \circ C0 & Ux \circ C1 \cdots & Ux \circ CN\text{-}1 \\
\vdots & & \vdots \\
UN\text{-}1 \circ C0 & \cdots & UN\text{-}1 \circ CN\text{-}1
\end{bmatrix}
=
\begin{bmatrix}
v(0) & \cdots & v(N-1) \\
\vdots & & \vdots \\
v(xN) & \cdots & v((x+1)N-1) \\
\vdots & & \vdots \\
v((N-1)N) & \cdots & v(N^2-1)
\end{bmatrix}
$$

$v$

EP 0 474 246 A2

## Fig.13

Subset $C^t{}_0$  Subset $C^t{}_1$  Subset V0  Subset V1  Subset VN-1

$$
C^t \times V
$$

$c(0,0)$ $c(1,0)$ $\cdots$ $c(N-1,0)$

$c(0,1)$ $c(1,1)$ $\cdots$ $c(N-1,1)$

Subset $C^t{}_2$

Subset $C^t{}_x$

Subset $C^t{}_{N-1}$

$v(0)$ ... $v(xN)$ ... $v((N-1)N)$

$v(1)$ ... $v(xN+1)$ ... $v((N-1)N+1)$

$v(N-1)$ ... $v((x+1)N-1)$ ... $v(N^2-1)$

$$
= \begin{bmatrix}
C^t{}_0 \circ V0 & \cdots & C^t{}_0 \circ VN-1 \\
C^t{}_x \circ V0 & C^t{}_x \circ V1 \cdots & C^t{}_x \circ VN-1 \\
C^t{}_{N-1} \circ V0 & \cdots & C^t{}_{N-1} \circ VN-1
\end{bmatrix}
= \begin{bmatrix}
v(0) & \cdots & v(N-1) \\
v(xN) & \cdots & v((x+1)N-1) \\
v((N-1)N) & \cdots & v(N^2-1)
\end{bmatrix}
$$

$v$

*Fig.14*

Writing

Column address → Address Assignment

0       1       N-1

Row address

0   $v(0)$    $v(1)$  ···  $v(N-1)$

1   $v(N)$    $v(N+1)$  ···  $v(2N-1)$

N-1   $v((N-1)N)$   $v((N-1)N+1)$     $v(N^2-1)$

Reading

Column address → Address Assignment

0       1       N-1

Row address

0   $v(0)$    $v(1)$  ···  $v(N-1)$

1   $v(N)$    $v(N+1)$  ···  $v(2N-1)$

N-1   $v((N-1)N)$   $v((N-1)N+1)$   $v(N^2-2)$   $v(N^2-1)$

Fig. 15

System Interface SIG — 89
Image SIG — 122
Reference Image SIG — 123

Subtract Clipping Unit — 93
Delay Circuit — 98, 99
Group of Multiplier & Accumulater Units — 100, 105
Clipping & Rounding Unit — 106
Central Controller — 90
TMG SIG Generating Unit — 109
DP RAM CONT Unit — 108
Dual-port RAM — 107
Clipping Rounding Adder Unit — 114
Group of Multiplier & Accumulator Unit — 103
91 CONT SIG Line
112 36 bit Data Bus
102 16 bit Data Bus

EP 0 474 246 A2

# Fig. 16

Fig. 17

124 Image SIG

125 Ref. Image SIG

126

Image
Processor

128

127

System Int.
SIG

130 Start SIG

129

DP-Memory
WR·RE
CONT Unit

Dual port
Memory

132
Start SIG

133
System Int. SIG

131

Image
Processor

134
Output SIG

48

Fig. 18

124 Image SIG

125 Ref. Image SIG

97 Subtract. Clipping Unit

98 Delay Circuit

99 16 bit Data Bus

100 Group of Multiplier & Accumulation Unit

109 TMG SIG Generating Unit

110 36 bit Data Line

90 CNT Controller

127 System Int. SIG

91 CONT SIG Line

114 Clipping & Adder Unit

102 16 bit Data Bus

103 Group of Multiplier & Accumulation Unit

112 36 bit Data Bus

EP 0 474 246 A2

# Fig. 19

X(n)

D    D    D    - - - -    D

a₀    a₁    a₂    a_{N-1}

Y(n)

D Delay    ⊗ Multiplier    ⊕ Adder

EP 0 474 246 A2

# Fig.20

Op.BLCK1  $X(n) \cdot a_0$   $X(n-1) \cdot a_0$   $X(n-2) \cdot a_0$   $X(n-3) \cdot a_0 \cdots\cdots$   $X(n-N) \cdot a_0$   $X(n-N-1) \cdot a_0$   $X(n-N-2) \cdot a_0 \cdots\cdots$

Op.BLCK2  $X(n) \cdot a_1$   $X(n-1) \cdot a_1$   $X(n-2) \cdot a_1$   $X(n-3) \cdot a_1 \cdots\cdots$   $X(n-N) \cdot a_1$   $X(n-N-1) \cdot a_1$   $X(n-N-2) \cdot a_1 \cdots\cdots$

Op.BLCK3  $X(n) \cdot a_2$   $X(n-1) \cdot a_2$   $X(n-2) \cdot a_2$   $X(n-3) \cdot a_2 \cdots\cdots$   $X(n-N) \cdot a_2$   $X(n-N-1) \cdot a_2$   $X(n-N-2) \cdot a_2 \cdots\cdots$

Op.BLCK4  $X(n) \cdot a_3$   $X(n-1) \cdot a_3$   $X(n-2) \cdot a_3$   $X(n-3) \cdot a_3 \cdots\cdots$   $X(n-N) \cdot a_3$   $X(n-N-1) \cdot a_3$   $X(n-N-2) \cdot a_3 \cdots\cdots$

Op.BLCK N  $X(n) \cdot a_{N-1}$   $X(n-1) \cdot a_{N-1}$   $X(n-2) \cdot a_{N-1}$   $X(n-3) \cdot a_{N-1} \cdots\cdots$   $X(n-N) \cdot a_{N-1}$   $X(n-N-1) \cdot a_{N-1}$   $X(n-N-2) \cdot a_{N-1} \cdots\cdots$

$Y(n)$   $Y(n-1)$   $\cdots\cdots$

Fig. 21

X(n)

$a_0$

$a_1$

$a_{N-1}$

Y(n)

D

D

OP. BLCK 1

OP. BLCK 2

OP. BLCK N-1

Register

Multiplier

Adder

D Delay

# Fig. 22

**135** Time Series SIG → **97** Subtract. & Clipping Unit → **98** Delay CRCT → **100** Group of Multiplier & Accumulation Units

**90** CNT Controller

**109** TMG SIG Generating Unit

**110** 36 bit Data Line

**136** System Int. SIG

**91** CONT SIG Line

**114** Clipping & Adder Unit

**137** Time Series SIG

**102** 16 bit Data Bus

**103** Group of Multiplier & Accumulation Units

**112** 36 bit Data Bus

EP 0 474 246 A2

## Fig. 23

**138**
Time Series SIG

**139** Image Processor

**140** Image Processor

**141** Image Processor

**142** Image Processor

**147**

**148**

**149**

**150**
Time Series SIG

**143**
System
Int. SIG

**144**
System
Int. SIG

**145**
System
Int. SIG

**146**
System
Int. SIG

EP 0 474 246 A2

Fig. 24

98 Variable Length Delay Circuit

212 CONT SIG

Fig. 25

Fig. 26

⊗ Multiplier    ⊕ Adder

EP 0 474 246 A2

# Fig. 27

OP. BLCK 1      OP. BLCK 2      OP. BLCK 3      OP. BLCK 4

$aXn$     $aXn+bYn$     $aXn+bYn+cZn$

EP 0 474 246 A2

Fig. 28